Europäisches Patentamt

European Patent Office

Office européen des brevets

(19)

(11) EP 1 241 609 A1

(12) **EUROPÄISCHE PATENTANMELDUNG**

(43) Veröffentlichungstag:
18.09.2002 Patentblatt 2002/38

(51) Int Cl.$^7$: **G06F 17/60**

(21) Anmeldenummer: 02001137.5

(22) Anmeldetag: 25.01.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **19.02.2001 EP 01103549**

(71) Anmelder:
• **Stöver, Burghard**
  **28219 Bremen (DE)**
• **Berghorn, Wilhelm**
  **28213 Bremen (DE)**

(72) Erfinder:
• **Stöver, Burghard**
  **28219 Bremen (DE)**
• **Berghorn, Wilhelm**
  **28213 Bremen (DE)**

(74) Vertreter: **Goddar, Heinz J., Dr.**
  **FORRESTER & BOEHMERT**
  **Pettenkoferstrasse 20-22**
  **80336 München (DE)**

(54) **Computersystem und Verfahren zur Sicherung von Kursgewinnen von Aktien- und/oder Wertpapieranlagen**

(57) Computersystem zur Sicherung von Kursgewinnen von Aktien- und/oder Wertpapieranlagen, mit Mitteln zum elektronischen Speichern eines Renditeziels für eine gekaufte Aktien- oder Wertpapiergattung, Mitteln zum elektronischen Erfassen des aktuellen Kurses der Aktienoder Wertpapiergattung, Mitteln zum Errechnen der Rendite und Vergleichen der berechneten Rendite mit dem Renditeziel, wobei die Mittel zum Berechnen und Vergleichen so gestaltet sind, daß sie, falls nötig, eine oder mehrere Neuberechnungen und Neuvergleiche mit jeweils von den Mitteln zum elektronischen Erfassen des aktuellen Kurses neu erfaßten Kursen durchführen, bis die berechnete Rendite größer als das Renditeziel ist, wobei die Mittel weiter so gestaltet sind, daß sie bei erstmaligem und jedem weiteren Eintritt des vorgenannten Falls für ein Speichern des berechneten Renditeziels als neues Renditeziel in den Mitteln zum elektronischen Speichern eines Renditeziels sorgen und, falls nötig, eine oder mehrere Neuberechnungen durchführen, bis die berechnete Rendite kleiner als das jeweilige neue Renditeziel ist und nicht innerhalb eines Toleranzwertes liegt, und Mitteln zur Ausgabe eines Hinweises zum Verkauf der Aktien- bzw. Wertpapiergattung, wenn die berechnete Rendite kleiner als das (neue) Renditeziel ist und nicht innerhalb eines Toleranzwertes liegt.

Fig. 3

EP 1 241 609 A1

**Beschreibung**

Die vorliegende Erfindung betrifft ein Computersystem und Verfahren zur Sicherung von Kursgewinnen von Aktien- und/oder Wertpapieranlagen. Als Gewinnmitnahmen werden Verkäufe von Aktien- bzw. Wertpapieranlegern bezeichnet, die nach einem Kursanstieg die erzielten Kursgewinne sichern, d. h. in bare Münzen umwandeln wollen.

Derzeit ist es bei Banken oder Brokern üblich, einen festen Stopp-Kurs, und das in der Regel auch noch zeitlich begrenzt, zu vereinbaren. Bei steigenden Aktien- bzw. Wertpapierkursen muß dieser permanent durch Eigeninitiative des Bank- bzw. Broker-Kunden (Aktien- bzw. Wertpapieranleger) oder durch jeweilige Rücksprache der Bank bzw. des Brokers mit dem Kunden angepaßt werden. Erfolgt keine Anpassung und fallen die Aktien- bzw. Wertpapierkurse wieder bis auf den (festen) Stopp-Kurs zurück, wird auch dann erst der Verkauf der Aktien- bzw. Wertpapiere ausgelöst. Dadurch bleiben zwischenzeitlich erreichte Buchgewinne unberücksichtigt.

Der vorliegenden Erfindung liegt somit die Aufgabe zugrunde, Kursgewinne ohne die Notwendigkeit der Rücksprache mit dem Kunden und ohne aufwendige Eigeninitiative des Kunden zu sichern.

Erfindungsgemäß wird diese Aufgabe gelöst durch ein Computersystem zur Sicherung von Kursgewinnen von Aktien- und/oder Wertpapieranlegern, mit Mitteln zum elektronischen Speichern eines Renditeziels für eine gekaufte Aktien- oder Wertpapiergattung, Mitteln zum elektronischen Erfassen des aktuellen Kurses der Aktien- oder Wertpapiergattung, Mitteln zum Errechnen der Rendite und Vergleichen der berechneten Rendite mit dem Renditeziel, wobei die Mittel zum Berechnen und Vergleichen so gestaltet sind, daß sie, falls nötig, eine oder mehrere Neuberechnungen und Neuvergleiche mit jeweils von den Mitteln zum elektronischen Erfassen des aktuellen Kurses neu erfaßten Kursen durchführen, bis die berechnete Rendite größer als das Renditeziel ist, wobei die Mittel weiter so gestaltet sind, daß sie bei erstmaligem und jedem weiteren Eintritt des vorgenannten Falls für ein Speichern des berechneten Renditeziels als neues Renditeziel in den Mitteln zum elektronischen Speichern eines Renditeziels sorgen und, falls nötig, eine oder mehrere Neuberechnungen durchführen, bis die berechnete Rendite kleiner als das jeweilige neue Renditeziel ist und nicht innerhalb eines Toleranzwertes liegt, und Mitteln zur Ausgabe eines Hinweises zum Verkauf der Aktien- bzw. Wertpapiergattung, wenn die berechnete Rendite kleiner als das (neue) Renditeziel ist und nicht innerhalb eines Toleranzwertes liegt. Für den Betrachtungszeitraum wird dabei auf den Kaufzeitpunkt bzw. den ersten Kaufzeitpunkt abgestellt. Weiterhin ist durch das erfindungsgemäße Verfahren ein Stopp-Kurs durch ein Maximum des Kursverlaufs, nachdem ein Renditeziel erreicht worden ist, abzüglich eines Toleranzwertes gegeben.

Zudem wird diese Aufgabe gelöst durch ein Verfahren zur Sicherung von Kursgewinnen von Aktien- und/oder Wertpapieranlegern unter Verwendung eines Computers, das die folgenden Schritte umfaßt:

a) elektronisches Speichern eines Renditeziels für eine gekaufte Aktien- oder Wertpapiergattung,

b) elektronisches Erfassen des aktuellen Kurses der Aktien- bzw. Wertpapiergattung,

c) Berechnen der Rendite und Vergleich der berechneten Rendite mit dem Renditeziel und, wenn die berechnete Rendite niedriger als oder genauso groß wie das Renditeziel ist, nochmaliger Durchlauf beginnend mit Schritt b),

anderenfalls

a') elektronisches Speichern der berechneten Rendite als neues Renditeziel,

b') elektronisches Erfassen des Kurses der Aktien- bzw. Wertpapiergattung,

c') Berechnen der Rendite und Vergleich der berechneten Rendite mit dem neuen Renditeziel und,

wenn die berechnete Rendite größer als das neue Renditeziel ist, nochmaliger Durchlauf beginnend mit Schritte a') bis c'),

wenn die berechnete Rendite niedriger als das neue Renditeziel ist, aber innerhalb eines Toleranzwertes liegt, Beibehalten des Renditeziels und nochmaliger Durchlauf beginnend mit Schritt b'), und,

wenn die berechnete Rendite kleiner als das neue Renditeziel ist und nicht innerhalb eines Toleranzwertes liegt, Ausgabe eines Hinweises zum Verkauf der Aktien- bzw. Wertpapiergattung.

Weiterhin wird diese Aufgabe gelöst durch ein Computerprogramm mit Programmcode-Mitteln, um ein Verfahren gemäß einem der Ansprüche 16 bis 24 durchzuführen, wenn das Programm auf einem Computer ausgeführt wird.

Außerdem wird diese Aufgabe gelöst durch ein Computerprogramm mit Programmcode-Mitteln nach Anspruch 25, die auf einem computerlesbaren Datenträger gespeichert sind.

Bei dem Computersystem kann vorgesehen sein, daß die Mittel zur Ausgabe eines Hinweises zum Verkauf so ausgebildet sind, daß der Hinweis nur ausgegeben wird, wenn ein vorgegebenes Zeitintervall nach dem Kauf verstrichen ist.

Es kann auch vorgesehen sein, daß die Mittel zum Berechnen der Rendite und Vergleichen der berechneten Rendite mit dem Renditeziel Mittel zur Berechnung einer annualisierten Rendite aufweisen, wobei die Mittel zur Berechnung einer annualisierten Rendite so ausgebildet sind, daß für Laufzeiten, die kleiner als ein Jahr sind, entweder die Rendite bezüglich Kaufkurs der gekauften Aktien- oder Wertpapiergattung oder die mittlere Jahres-Rendite berechnet wird.

Nach einer bevorzugten Ausführungsform der Erfindung ist das Computersystem versehen mit Mitteln zur Berechnung eines Aktien- bzw. Wertpapierindex für die Aktien und Wertpapiere eines Kunden-Depots, wobei die Mittel zur Berechnung eines Wertpapier-Index so ausgestaltet sind, daß der Index-Verlauf bei einem Zu- oder Verkauf einer Aktie oder Wertpapiers stetig ist, und wobei die Mittel zum Berechnen der Rendite und Vergleichen der berechneten Rendite mit dem Renditeziel zum Zugriff auf den Index-Verlauf als Prüfkriterium ausgebildet sind. Das vorgegebene Minimum entspricht dabei einem sogenannten Stop-Loss-Kurs zur Begrenzung von Kursverlusten.

Wenn eine Spekulationsfrist berücksichtigt wird, wird nur dann ein Hinweis zum Verkauf (Verkaufssignal) für eine Gewinnmitnahme ausgegeben, wenn seit dem Kauf der betreffenden Aktie bzw. des betreffenden Wertpapiers ein vorgegebenes Zeitintervall, das heißt die Spekulationsfrist, verstrichen ist.

Gemäß einer weiteren besonderen Ausführungsform der Erfindung ist das Computersystem mit Mitteln zur Prüfung, ob ein vorgegebenes Minimum des Kursverlaufs erreicht worden ist, und Mitteln zur Ausgabe eines Verkaufssignals, wenn das Minimum erreicht worden ist, versehen.

In einer weiteren besonderen Ausführungsform der Erfindung ist das Computersystem versehen mit Datenbankmitteln zur Eingabe und gegebenenfalls Speicherung der folgenden Angaben hinsichtlich eines Wertpapiers:

- Kaufkurs,

- Kaufzeit,

- Stückzahl,

- - absolutes Rendite-Ziel,

- annualisiertes Rendite-Ziel,

- Prüfung des Rendite-Ziels bezogen auf einen Aktien- bzw. Wertpapier-Index,

- Maximum des Kursverlaufs, nachdem das Renditeziel erreicht worden ist,

- vorgegebenes Minimum des Kursverlaufs,

- Beachtung einer Spekulationsfrist, wobei die Mittel zur Bestimmung eines Maximums des Kursverlaufs zum Zugriff auf die Datenbankmittel ausgebildet sind, um ein Maximum des Kursverlaufs abzuspeichern.

Weiterhin kann vorgesehen sein, daß die Mittel Bestandteil eines Computers sind.

Günstigerweise sind ein Server-Computer zur Bereitstellung von Aktien-Wertpapierkursen und ein Server-Computer zur Ausgabe von Verkaufsaufträgen vorgesehen, die über ein Netzwerk mit dem Computer verbindbar sind.

Alternativ kann vorgesehen sein, daß das Computersystem versehen ist mit:

- Mitteln zur Generierung von Webseiten zur Verfügungstellung einer Nutzerschnittstelle,

- Mitteln zur Speicherung von Nutzergruppen, wobei jedem Nutzer Zugriffsrechte zugeordnet sind,

- Mitteln zur Eingabe eines Nutzers einer Nutzergruppe als Administrator, wobei die Mittel zur Speicherung so ausgebildet sind, daß der Adminstrator die Nutzer seiner Nutzergruppe und deren Zugriffsrechte eingeben kann.

Insbesondere kann dabei vorgesehen sein, daß das Computersystem versehen ist mit

- Mitteln zur Eingabe von Kundendaten, wobei jeder Kunde einem Zwei-Tupel von Nutzern derselben Nutzergruppe zugeordnet wird,

- Mitteln zur Eingabe von Vertragsdaten, wobei jeder Vertrag einem Zwei-Tupel von Nutzers derselben Nutzergruppe zugeordnet wird,

- Mitteln zur automatischen Erzeugung eines Bearbeitungsstatus für die Kundendaten und die Vertragsdaten,

- Mitteln zur Erzeugung von Arbeitslisten, basierend auf dem Bearbeitungsstatus für jeden der Nutzer.

Vorteilhafterweise sind die Mittel Bestandteil eines Server-Computers.

Besonders bevorzugt wird ein Application Service Provider (ASP)-Server-Computer. In diesem Fall kann das Computersystem von verschiedenen Finanzdienstleistern, wie z. B. Vermögensberatungsgesellschaften oder Banken, genutzt werden. Der ASP-Server-Computer hat vorzugsweise ein Datenbank-System, welches die interne Kommunikation, die Kommunikation mit dem Kunden und die erforderlichen Verwaltungsabläufe unterstützt.

Nach einer bevorzugten Ausführungsform der Erfindung bietet ein solches Datenbanksystem die Möglichkeit, die Stammdaten von unterschiedlichen Firmen, das heißt beispielsweise Vermögensberatungsgesellschaften und Banken zu erfassen. Des weiteren dient dieses Datenbanksystem zur.Erfassung der betreffenden Mitarbeiter und deren jeweiligen Zugriffsrechten.

Vorzugsweise hat zumindest ein Mitarbeiter einer Firma die Rolle eines "Firmen-Administrators", welche dem betreffenden Mitarbeiter unter anderem das Recht gibt, Mitarbeiterdaten einzugeben und Zugriffsrechte zuzuordnen. Der Firmen-Administrator wird dabei von einem Administrator des ASP Server-Computers eingegeben.

Ferner werden in dem Datenbanksystem vorzugsweise auch die Stammdaten der Kunden sowie Depot-Daten und die Parameter zur Absicherung der Anlage (Vertragsdaten, d.h. Rendite-Ziel, Toleranz, Stopp-Loss-Kurs, etc, die vertraglich zwischen Endkunden und Berater festgelegt werden) betreffend einzelne Wertpapiere erfasst. Jeder Kunde und jeder Vertrag ist einem Team von Nutzern der betreffenden Firma, das heißt einem Zwei-Tupel von Nutzern, zugeordnet. Diese Zuordnung entscheidet über die Zuständigkeit der Bearbeitung beispielsweise von Verkaufssignalen.

Nach einer weiteren bevorzugten Ausführungsform der Erfindung wird für jeden Nutzer eine Arbeitsliste generiert, wobei die Generierung der Arbeitsliste, basierend auf den Verträgen und den Kunden zugeordnete Statusinformationen basiert.

Das Datenbanksystem erlaubt also einen effektiven, computergestützten Arbeitsablauf für die Kunden- und Vertragsverwaltung. Von besonderem Vorteil ist dabei, dass das "Vier-Augen-Prinzip" von dem System unterstützt wird, das heißt eine Eintragung wird durch einen Mitarbeiter angemeldet und durch eine übergeordnete Instanz kontrolliert und bestätigt. Intern folgt daraus, dass Eintragungen immer mindestens zwei Zustände haben: angemeldet und bestätigt. Ist ein Vorgang nur angemeldet, so befindet sich dieser Vorgang zwar in der Datenbank, wird aber nicht vom System bearbeitet. Sobald ein Vorgang bestätigt wird, kann dieser vom System auch bearbeitet werden.

Wenn beispielsweise ein Berater ein erstes Kundengespräch hat, meldet er hierzu die Stammdaten des Kunden an. In diesem ersten Kundengespräch werden zum Beispiel Fondsanlagen angeboten. Generell wird diesem Beratungsgespräch ein Antrag auf Abschluss einer Fondsanlage folgen, die in einem weiteren Schritt noch bestätigt werden muss. Der Berater meldet nun die Kundenstammdaten im System an. Diese erhalten den Zusatz "angemeldet" und können abgefragt werden (z.B. für die Versendung von generellen Produktinformationen).

Nach der Anmeldung werden diese Kundenstammdaten dem Firmen-Administrator im System, mit der Bitte um Kontrolle sowie mit Bitte einer Bestätigung seinerseits, gemeldet. Korrigiert der Firmen-Administrator die Stammdaten und/oder bestätigt diese, so wird dieser Kundendatensatz mit "bestätigt" in der internen Datenbank gekennzeichnet. Ab diesem Zeitpunkt kann diesem Kunden auch Verträge, etc. zugeordnet werden. Der Kunde wird solange beim Firmenadministrator mit Bitte um Bestätigung gelistet, bis dieser die Bestätigung ausübt.

Möchte der Kunde einen Kontrakt mit dem Beratungsunternehmen vertreten durch den Berater über die Absicherung einer Anlage schließen, so wird ein entsprechender Vertrag in der Datenbank angemeldet. In diesem Arbeitsablauf kann der Berater auch die notwendigen Formulare für den Kunden ausdrucken. Hiermit gilt der Vertrag als beantragt, d.h. dieser wird als solcher in der Datenbank gekennzeichnet. Ein solcher Antrag wird vom Berater und vom Kunden unterschrieben und erst durch eine dritte Unterschrift des Firmen-Administrators rechtskräftig. Der Firmen-Administrator muss neben der Unterschrift ebenfalls im System den beantragten Kontrakt bestätigen. Ab diesem Zeitpunkt wird dieser bestätigte Kontrakt in der Datenbank überwacht.

Wird ein Vertrag vom Kunden gekündigt so wird der Sachbearbeiter oder Berater diese Kündigung im System anmelden. Diese Kündigung erscheint nun mit Bitte um Bestätigung bei dem assoziierten Berater, der die Kündigung bestätigt. Im Prozess der Anmeldung durch den Sachbearbeiter kann ein Formbrief ausgedruckt werden, der dem Berater zur Unterschrift vorgelegt wird. Mit Bestätigung der Kündigung wird der entsprechende Kontrakt aus der Datenbank gelöscht.

Wird durch das Computersystem ein Verkaufssignal generiert, d.h. die Fondsanteile als zu verkaufen markiert, so wird dieses dem Sachbearbeiter durch das System gemeldet. Der Sachbearbeiter oder Berater druckt ein entsprechendes Formular für die Kundenbenachrichtigung sowie den vorliegenden Verkaufsauftrag (digital gespeichert) aus und legt dieses dem Kundenberater zur Unterschrift vor. Die entsprechende Verkaufsorder wird durch den Sachbearbeiter angemeldet. Diese Anmeldung wird durch den Berater bestätigt und der Verkauf initiiert.

Durch das Löschen eines Mitarbeiters (Berater) müssen assoziierte Kontrakte ( d.h. die Verträge zwischen Endkunden und Berater, welche die Absicherungsparameter für eine Anlage enthalten) einem anderem Mitarbeiter zugeordnet werden. Hierzu wird das Löschen des Mitarbeiter solange unterbunden, bis jeder einzelne Kontrakt einem anderen Berater zugewiesen ist.

Generell werden Verträge und Kunden von Teams betreut. Teams sind Paare von Mitarbeitern einer Firma, die sich aus einem Berater und einem Sachbearbeiter zusammensetzen. Diese Teams sind jedem Vertrag und Kunden zugeordnet. Jede Statusänderung eines Kunden oder eines Vertrages wird durch eine Änderung der Attribute des entsprechenden Objektes mitprotokolliert. Dadurch wird erreicht, dass zu jeder Zeit nachvollzogen werden kann, wer bestimmte Statusänderungen hervorgerufen hat.

Durch den ASP - Ansatz benötigen die angeschlossenen Firmen oder Berater jeweils nur eine geringe Infrastruktur (Computer, Browser, Internet-Anschluss), um mit diesem Computersystem arbeiten zu können. Zudem können mehrere Mitarbeiter (Nutzer des Computersystems) parallel auf dem gleichen Kunden- und Vertragsbestand einzeln oder im Team arbeiten. Somit kann sichergestellt werden, dass bei einer Fülle von Vertragsanmeldungen oder Vertragsabmeldungen verschiedene Mitglieder eines Teams die Aufgaben effizient durchführen können.

Weiter wird durch das Abbilden des Arbeitsflusses des Beraters sichergestellt, dass die abgeschlossenen Verträge mit dem Kunden so eng wie möglich durch die Datenbank-Inhalte repräsentiert werden.

Der gewählte ASP-Ansatz ist insbesondere deshalb vorteilhaft, da die angeschlossenen Berater oder Firmen nur eine unbedeutende Infrastruktur aufweisen müssen, um an dieses System angeschlossen werden zu können. Des weiteren können die Teilnehmer an diesem System sich von jedem beliebigen Ort aus (Voraussetzung Terminal & Internetverbindung) anmelden. Zusätzlich besteht die Möglichkeit, den Endkunden der angeschlossenen Berater ebenfalls einen Zugang zu den aktuellen Depotwerten und erreichten Renditen zu geben.

Besonders vorteilhaft sind dabei ferner die folgenden Aspekte:

- Die verschiedenen Kombinationen der Verträge lassen eine größere Flexibilität in der Anlage des Kunden-Vermögens zu. Des weiteren sind diese Sicherungsparameter nicht zeitlich beschränkt wie allgemein üblich.

- Die Möglichkeit Teams, aus Sachbearbeiter und Berater zu bilden entspricht dem üblichen Vorgehen in größeren Beratungsfirmen. Durch diese Funktionalität im System kann die Arbeit unter den Team-Mitgliedern aufgeteilt werden.

- Durch Einführung von Zugriffsrechten wird es ermöglicht, bestimmte Verantwortungen, die z.B. in einer Beratungsfirma bestehen, direkt in das System zu übernehmen.

- Vorteil des Vier-Augen-Prinzips (also der Notwendigkeit der Bestätigung durch den Firmenadministrator bei geschäftsrelevanten Ereignissen) ist, dass die Firmenadministration bzw. Firmenleitung immer über Veränderungen im Kunden- bzw. Vertragsbestand informiert wird und hier auch mit den beteiligten Beratern Rücksprache halten kann. Durch diese Funktionalität des Systems wird eine große Transparenz über den Kundenstamm aber auch der abgeschlossenen Verträge sowie deren Entwicklung erreicht.

- Durch die Abbildung des Arbeitsflusses bei Beratungen im System wird erreicht, dass die jeweiligen Beziehungen bzw. Vertragszustände mit dem Kunden so eng wie möglich abgebildet werden. So wird z.B. bei der Vertragsauswahl für den Kunden zugleich der Ausdruck der notwendigen Formulare vorbereitet. Sobald ein Vertrag vom Kunden unterschrieben wird, wird dieser im System angemeldet und der Geschäftsführung zur Unterschrift vorgelegt. Die Geschäftsführung / Firmenadministration soll parallel zu der Unterschrift diesen Vertrag bestätigen. Der Vertrag kann somit erst dann aktiviert werden, wenn dieser von der Firmenadministration freigegeben bzw. unterschrieben wurde.

Zweckmäßigerweise sind ein Server-Computer zur Bereitstellung von Aktien- und Wertpapierkursen und ein Server-Computer zur Ausgabe von Verkaufsaufträgen vorgesehen, die über ein Netzwerk mit dem ASP-Server-Computer verbindbar sind.

Vorteilhafterweise ist mindestens ein Computer einer Bank oder dergleichen vorgesehen, der über ein Netzwerk mit dem ASP-Server-Computer verbindbar ist.

Schließlich kann der ASP-Server-Computer so ausgelegt sein, daß mindestens ein Kunde der Bank oder dergleichen unmittelbar über das Netzwerk mit dem ASP-Server-Computer kommunizieren kann.

Die Verfahrensunteransprüche betreffen vorteilhafte Weiterbildungen der Erfindung.

Der Erfindung liegt die überraschende Erkenntnis zugrunde, daß durch die besondere Kursüberwachung und -auswertung Rücksprachen mit dem Aktien- bzw. Wertpapieranleger bzw. eine aufwendige Eigeninitiative desselben nicht erforderlich sind. Es erübrigt sich also eine Interaktion zwischen dem Kunden und seiner Bank bzw. seinem Broker, sowie auch ein externer Datenbankzugriff. Vielmehr erfolgt die Anpassung vollautomatisch durch das erfindungsgemäße Computersystem, ohne daß ein externer Datenbankzugriff und der Aufbau einer hierfür benötigten Datenübertragung erforderlich ist.

Der Hinweis zum Verkauf (Verkaufssignal) kann elektronisch z. B. auf einem Bildschirm ausgegeben werden, so daß der Bankberater oder Broker und/oder der Kunde selbst die Verkaufsempfehlung zur Kenntnis nehmen kann. Die elektronische Ausgabe des Verkaufssignals kann dabei z. B. in Form einer elektronischen Nachricht, das heißt einer sogenannten E-mail oder in Form einer Arbeitsliste erfolgen. Alternativ oder zusätzlich kann der Verkauf aufgrund des Verkaufssignals vollautomatisch abgewickelt werden, indem z. B. eine entsprechende Verkaufsorder von dem Computersystem generiert wird und über eine Datenleitung an die betreffende Fonds-Gesellschaft oder einen Online-Broker übermittelt wird.

Im Weiteren wird eine bevorzuge Ausführungsform der Erfindung mit Bezugnahme auf die Zeichnungen näher erläutert. Es zeigen:

Figur 1    eine erste Ausführungsform eines erfindungsgemäßen Computersystems für den Handel mit Wertpapieren,

Figur 2    eine Ausführungsform der Kundendatenbank des Computersystems der Figur 1,

Figur 3    eine Ausführungsform des erfindungsgemäßen Verfahrens anhand eines Kursverlaufs,

Figur 4    eine Ausführungsform eines erfindungsgemäßen Computersystems für den Handel mit Wertpapieren mit einem ASP Server-Computer.

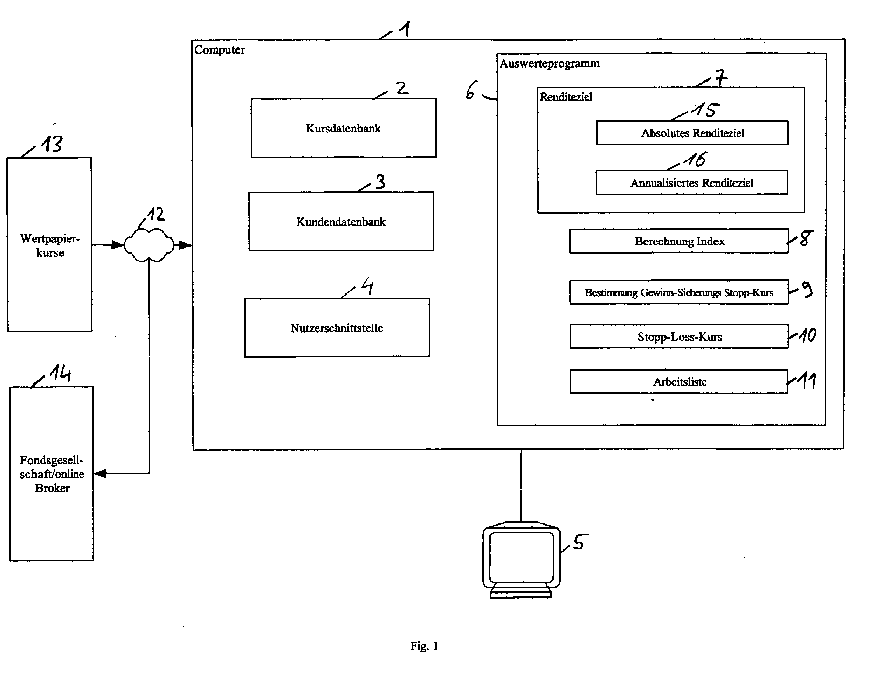

Die Figur 1 zeigt ein Computersystem mit einem Computer 1 mit einer Kursdatenbank 2 und einer Kundendatenbank 3. Die Kursdatenbank 2 dient zur Speicherung von aktuellen Wertpapier-Kursen, die für die Auswertung erforderlich sind.

In der Kundendatenbank 3 sind die Stammdaten eines Kunden sowie eine oder mehrere Wertpapier-Kennnummern des Kunden-Depots gespeichert. Für ein bestimmtes Wertpapier kann der Kunde spezifizieren, ob ein absolutes Renditeziel oder ein annualisiertes Renditeziel zu überwachen ist, und zwar bezogen auf den Kurs-Verlauf des betreffenden Wertpapiers oder bezogen auf einen Kunden-Depot-Index.

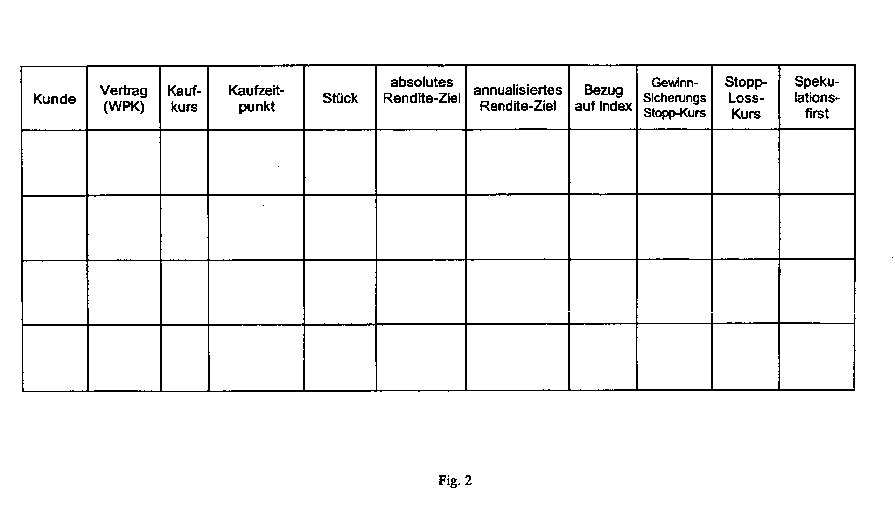

Ferner kann in die Kundendatenbank 3 eingegeben werden, ob der Kunde einen Gewinn-Sicherungs-Stopp-Kurs zur Sicherung von Kursgewinnen wünscht und wie groß gegebenenfalls der Toleranzwert ist. Ferner kann optional ein Stopp-Loss-Kurs sowie die Beachtung einer Spekulationsfrist eingegeben werden. Eine bevorzugte Ausführungsform der Kundendatenbank 3 wird weiter unten mit Bezug auf die Figur 2 näher erläutert.

Die Eingabe der Daten in die Kundendatenbank 3 erfolgt über eine Nutzerschnittstelle 4, die beispielsweise von dem Betriebssystem des Computers 1 zur Verfügung gestellt wird und Eingaben sowie Ausgaben über auf den an den Computer 1 angeschlossenen Monitor 5 ermöglicht.

Der Computer 1 hat ferner ein Auswerteprogramm 6 mit einem Programmmodul 7 zur Prüfung, ob ein Renditeziel erreicht worden ist, einem Programmmodul 8 zur Berechnung eines kundenspezifischen Wertpapier-Index, einem Programmmodul 9 zur Bestimmung des Gewinn-Sicherungs-Stopp-Kurses, einem Programmmodul 10 zur Überwachung der Erreichung des Stopp-Loss-Kurses und einem Programmmodul 11 zur Generierung einer Arbeitsliste, die beispielsweise zu tätigende Verkäufe anzeigt.

Der Computer 1 ist über ein Netzwerk 12, beispielsweise über das Internet oder über das Telefonnetzwerk, mit einem Server-Computer 13 verbunden, von dem aktuelle Wertpapier-Kurse abrufbar sind. Ferner ist der Computer 1 über das Netzwerk 12 mit einem Server-Computer 14 einer Fonds-Gesellschaft oder eines Online-Brokers verbunden, um Verkaufsorders zu tätigen. Alternativ zu einem Server-Computer kann seitens der Fonds-Gesellschaft auch beispielsweise ein Fax-Gerät vorhanden sein, um per Fax übermittelte Verkaufsorders entgegen zu nehmen.

Beim Betrieb des Computers 1 werden die aktuellen Wertpapier-Kurse der in der Kundendatenbank 3 erfassten Wertpapiere über das Netzwerk 12 von dem Server-Computer 13 abgefragt und in der Kursdatenbank 2 gespeichert. Das Auswerteprogramm 6 greift dann auf die Kursdatenbank 2 zu, um die Auswertung des Kursverlaufs nach den in der Kundendatenbank 3 gespeicherten Kundenvorgaben vorzunehmen.

Das Programmmodul 7 prüft dann automatisch, ob das angestrebte Renditeziel erreicht worden ist. Wenn der Kunde die Erreichung eines absoluten Rendite-Ziels vorgegeben hat, wird das Programmmodul 15 gestartet; wenn hingegen ein annualisiertes Renditeziel vom Kunden vorgegeben worden ist, das Programmmodul 16. Für die Art der Berechnung der Rendite ist ferner entscheidend, ob der Kunde die Rendite-Berechnung bezogen auf ein einzelnes Wertpapier oder bezogen auf den Index-Verlauf seines Kunden-Depots wünscht.

Wenn das Programmmodul 15 gestartet wird, wird also geprüft, ob der Kurs-Verlauf bzw. der Index-Verlauf einen vorbestimmten Wert erreicht hat.

Gerade bei Anlagen in Investmentsfonds ist es vorteilhaft Rendite-Ziele annualisiert anzugeben bzw. mit Zinseszins anzugeben. Hierdurch wird ermöglicht, dass langfristige Rendite-Ziele verfolgt werden können. Die Grundidee hierbei ist, es jedem Vertrags-Typ mit Renditeziel mit eine annualisiert bzw. per Zinseszins Rendite auszustatten.

Da insbesondere die Formel für die Zinses-Zins-Rendite für kurze Laufzeiten instabil ist, (d.h. kleine Performance-Änderungen erzeugen große Änderungen der Zinses-Zins-Rendite) wird für Laufzeiten, die kleiner ein Jahr sind, entweder die Rendite bezüglich Kaufkurs oder die mittlere Jahres-Rendite berechnet. Die folgende Formel stützt sich auf Tages-Abstände, kann aber auch für Wochenabstände, etc. modifiziert werden und ist mit der mittleren Jahres-Rendite für Zeiträume unter einem Jahr definiert:

Sei $(s_t)$ die Folge aller Kurse für ein Wertpapier $s$ zu Zeitpunkten in Tagen $t$. Dann sei $R(s,t_0,t_1) = \dfrac{s_{t_1} - s_{t_0}}{s_{t_0}}$ die Rendite bezüglich des Kaufkurses $s_{t_0}$ zum Zeitpunkt $t_0$ sowie dem jetzigen Zeitpunkt $t_1$ mit $t_0 < t_1$.

Die annualisierte Rendite berechnet sich dann durch

$$R_A(s,t_0,t_1) = \begin{cases} \dfrac{t_1 - t_0}{T} R(s,t_0,t_1), & t_1 - t_0 \leq T \\[2mm] \left(1 + R(s,t_0,t_1)\right)^{\frac{T}{t_1 - t_0}} - 1, & t_1 - t_0 > T \end{cases}$$

wobei üblicherweise T üblicherweise auf 365 gesetzt ist und nur bei Schaltjahren T=366 gilt. Hierbei entspricht

$$\dfrac{t_1 - t_0}{T} R(s,t_0,t_1), t_1 - t_0 \leq T$$

einem Investitionsverhalten, welches nach der Zeitperiode $[t_0,t_1]$ die Anlage verkaufen würde und auf eine Wiederanlage verzichtete.

Vorteilig ist diese Berechnungmethode, um auch kurzfristige Gewinne von Wertpapier-Anlagen (Investment-Periode < 1 Jahr) auf Jahresfrist bewerten zu können sowie einen Vergleich zu risikofreien Anlagen mit Wiederanlage (z.B. Festgeld, etc.) zu ermöglichen .

Wenn die Prüfung eines annualisierten Rendite-Ziels vom Kunden gewünscht wird, wird also das Programmmodul 16 gestartet, welches die annualisierte Rendite, wie oben angegeben, berechnet und mit dem Renditeziel vergleicht.

Generell können Investments gerade im Fondsbereich "kontinuierlich" ausgeführt werden. Beispielsweise können monatlich Anteile eines Fonds bezüglich einer festen Anlagesumme erworben werden. Hierdurch erwirbt der Anleger viele Anteile, wenn der Fonds einen niedrigen Kurs hat und weniger Anteile, wenn der Kurs hoch ist. Im Allgemeinen gleicht der Anleger hierdurch Kursschwankungen aus (allgemein üblich ist es, diesen Effekt als "Cost-Average-Effekt" zu bezeichnen) und reduziert hierdurch Anlage-Risiken. Die Ausstattung dieser Investment-Methode mit den oben angegeben Sicherungsmethoden sowie der Berechnung von Rendite-Zielen (bezüglich Kaufkurs oder "annualisert"), ermöglicht es auch diese Anlageform zu sichern.

Die Grundidee ist hierbei die Berechnung der Rendite der kumulierten Investitionen zu jedem Kauf-Zeitpunkt in Abhängigkeit des Basisinvestments. Kaufzeitpunkte können flexibel gehandhabt werden und können zu jeder möglichen Zeit angegeben werden. Allgemein ist es aber üblich bei Anlagen in Fonds (Fondssparen), äquidistante monatliche Zeitpunkte zu wählen.

Jeder Investitions-Zeitpunkt ist hierbei mit einer Kaufsumme sowie der Anzahl der Anteile ausgestattet.

Vorteilhaft ist, dass kontinuierliche Investments mit den oben beschriebenen Methoden überwacht und gesichert werden können.

Im folgenden wird eine allgemeine Variante zur Bewertung der Performance von Depots gegeben, die unmittelbar auf die Bedürfnisse von Fondsspar-Anlagen (regelmäßiger Kauf von Wertpapieren) angepasst werden kann. Diese ist analog zur Berechnung von Index-Werten, wie z.B. dem Deutschen-Aktien-Index der Deutschen Börse AG:

Sei $s_k(t)$ der Preis eines Wertpapiers einer Depotposition $k$ zum Zeitpunkt $t$. Die Zeitpunkte seien wieder in Tagesauflösung gegeben und der Preis $s_k(t)$ sei der Schlusskurs des Wertpapiers (andere zeitliche Auflösungen sind möglich). Sei $n_k(t)$ die Anzahl der Wertpapiere der Depotposition $k$ zum Zeitpunkt $t$. Dann berechnet sich der Depot-Wert zum Zeitpunkt $t$ durch

$$D(t) = \sum_k s_k(t)n_k(t) .$$

Problem bei der Berechnung der Performance des Depots sind die möglichen Zu- bzw. Verkäufe von Depot-Positionen zu bestimmten Zeitpunkten. Seien diese Zeitpunkte, an denen sich das Depot ändert, durch $t_1,...,t_N$ definiert. Sei außerdem

$$D^*(t) = \sum_k s_k(t)n_k(t) + S_M n_M$$

der modifizierte Depotwert an einem Kaufzeitpunkt durch Hinzunahme einer weiteren Depotposition M zu $n_M$ Stück und einem Kaufpreis $S_M$.

Dann sei $i^*(t) = \max\{i|i \in \{1,...,N\} \wedge t_i \leq t\}$ der Index des jüngsten Kaufzeitpunktes $t_i$ und seien $K_0,..., K_N$ Verkettungsfaktoren, die rekursiv durch

$$K_i = \frac{D(t_i - 1)}{D^*(t_i)} \ K_{i-1} \ \text{mit} \ K_0 = 1 \ \text{berechnet werden können.}$$

Dann kann durch

$I(t) = K_{i^*(t)}D(t)I$ eine verkettete Index-Zeitreihe berechnet werden. Die Index-Zeitreihe $I(t)$ muss hierbei implizit über die rekursiv definierten Verkettungsfaktoren $K_i$ mit $D(t) = 1$ für $t < t_1$ berechnet werden , wobei $I$ einen beliebigen Wert (beim DAX z.B. 1000) annehmen kann, bei der Berechnung der Rendite des Depots aber das letzte verfügbare Gesamt-Kauf-Volumen aller Depot-Positionen annehmen sollte.

Wenn sich in der Kundendatenbank 3 für das betreffende Wertpapier ein Eintrag befindet, wonach das Renditeziel auf den Depot-spezifischen Index hin geprüft werden soll, wird das Programmmodul 8 gestartet, um den Index I(t) nach der oben angegebenen Formel zu berechnen.

Wenn das Renditeziel erreicht worden ist, startet des Programmmodul 7 das Programmmodul 9 zur Bestimmung des Gewinn-Sicherungs-Stopp-Kurses. Bei einer erstmaligen Erreichung des Renditeziels, wird der dazugehörige Kurs abzüglich der Toleranz als Gewinn-Sicherungs-Stopp-Kurs durch das Programmmodul 9 in einem Speicher des Computers 1 gespeichert.

Das entsprechende Wertpapier oder Kunden-Depot befindet sich daraufhin in der Überwachung für die Sicherung der erzielten Kursgewinne. Das bedeutet, dass im weiteren Handelsverlauf aktuelle Wertpapierkurse von dem Programmmodul 9 daraufhin untersucht werden, ob diese abzüglich der Toleranz oberhalb oder unterhalb des zuvor abgespeicherten Gewinn-Sicherungs-Stopp-Kurses liegen. Wenn der aktuelle Kurs bzw. Index-Wert abzüglich der Toleranz oberhalb des zuvor gespeicherten Gewinn-Sicherungs-Stopp-Kurses liegt, so wird der aktuelle Kurswert bzw. Indexwert abzüglich der Toleranz als neuer Gewinn-Sicherungs-Stopp-Kurs anstelle des vorhergehenden in dem Speicher des Computers 1 abgelegt.

Unterschreitet hingegen der aktuelle Kurswert bzw. der aktuelle Index-Wert den vorangegangen Kurs- bzw. Index-Wert, so wird geprüft, ob diese Unterschreitung innerhalb des von dem Kunden spezifizierten und in der Kundendatenbank 3 gespeicherten Toleranzbereichs (also oberhalb des Stop-Kurses) liegt. Wenn die Unterschreitung innerhalb des Toleranzbereichs liegt, wird der bisherige Gewinn-Sicherungs-Stopp-Kurs beibehalten; darüber hinaus erfolgt keine Aktion.

Wenn hingegen der Toleranzbereich, das heißt die Schwankungsbreite nach unten hin, unterschritten wird, also der Kurs- bzw. Indexwert unter den Stop-Kurs fällt, so wird von dem Programmmodul 9 automatisch ein Verkaufssignal generiert.

Wenn der Kunde einen Stopp-Loss-Kurs angegeben hat, so wird für jeden neuen Wertpapierkurs mittels des Programmmoduls 10 geprüft, ob dieser Stopp-Loss-Kurs erreicht bzw. unterschritten wird. Für den Fall, dass der Stopp-Loss-Kurs erreicht oder unterschritten wird, gibt das Programmmodul 10 automatisch ein Verkaufssignal ab.

Die von dem Programmmodulen 9 und 10 generierten Verkaufssignale können als automatische Verkauforders von dem Computer 1 über das Netzwerk 12 an den Server-Computer 14 bzw. das entsprechende Faxgerät ausgegeben werden, so dass der Verkauf des oder der betreffenden Wertpapiere automatisch abgewickelt wird. Alternativ wird das Programmmodul 11 gestartet, welches eine Arbeitsliste erzeugt, die die abzuwickelnden Verkäufe beinhaltet. Diese Arbeitsliste wird auf dem Monitor 5 angezeigt, so dass ein Nutzer sie abarbeiten kann.

Der Computer 1 kann beispielsweise für den Handel mit Aktienfonds eingesetzt werden. Bei solchen Aktienfonds wird an jedem Handelstag beispielsweise um 14.00 Uhr oder um 16.00 Uhr der Rücknahmekurs festgesetzt. Zu diesem Tageskurs können dann an darauffolgenden Handelstag Fondanteile an die Fondsgesellschaft zurückgegeben werden. Für diesen Anwendungsfall werden also die börsentäglich festgesetzten Kurse der Aktienfonds von dem Server-Computer 13 abgerufen und von dem Auswerteprogramm 6 ausgewertet. Daraufhin wird eine Arbeitsliste mittels des Programmmoduls 11 erzeugt, die dann von einem Nutzer abgearbeitet werden kann, indem der Nutzer beispielsweise entsprechende Verkaufsaufträge per Telefax oder online an die betreffende Fonds-Gesellschaft oder den betreffenden Online-Broker sendet.

Vorzugsweise ist das Auswerteprogramm 6 so eingerichtet, dass es automatisch zu einem bestimmten Zeitpunkt, beispielsweise nach Beendigung eines Handelstags gestartet wird, um die Tageskurse auszuwerten und eine entsprechende Arbeitsliste zu erzeugen. Dieses kann dann am nächsten Morgen von dem Nutzer des Computers 1 abgearbeitet werden.

Alternativ oder zusätzlich kann der Computer 1 auch so eingerichtet werden, dass ständig der Handelsverlauf von bestimmten Aktien und Wertpapieren verfolgt wird, indem die betreffenden Wertpapierkurse von dem Server-Computer 13 geladen werden, sobald sie zur Verfügung stehen. Entsprechend häufig wird dann auch das Auswerteprogramm 6 gestartet. Für diese Anwendungsform, die aufgrund der ständigen Fluktuation der Kurse zeitkritisch ist, empfiehlt sich die unmittelbare elektronische Weiterleitung eines von den Programmmodulen 9 oder 10 ausgegebenen Verkaufssignals an den Server-Computer 14.

Die Figur 2 zeigt eine Ausführungsform der Kundendatenbank 3 der Figur 1. Für jeden Kunden sind in der Kundendatenbank ein oder mehrere Verträge vorhanden, die durch die Wertpapierkennnummer des betreffenden Wertpapiers, das heißt beispielsweise der Aktie oder des Investmentfonds, gekennzeichnet sind. Für jeden Vertrag beinhaltet die Kundendatenbank den Kaufkurs sowie den Kaufzeitpunkt und die Stückzahl der gekauften Aktien bzw. Fondsanteile.

Für den Fall, dass der Kunde ein absolutes Renditeziel angegeben hat, beinhaltet die Datenbank dieses Renditeziel in Prozent oder als absoluten Wert bezogen auf den Kurs des betreffenden Wertpapiers oder bezogen auf einen Index-Wert.

Wenn der Kunde ein annualsiertes Renditeziel wünscht, so ist dieses ebenfalls in der Datenbank vermerkt. Für den Fall, dass das absolute Renditeziel oder das annualisierte Renditeziel mit Bezug auf den Index-Verlauf des Kunden-Depots geprüft werden soll, ist in der Datenbank ein entsprechender Eintrag vorhanden. Ferner beinhaltet die Datenbank ein Feld für den Gewinn-Sicherungs-Stopp-Kurs, der von dem Programmmodul 9 (vgl. Figur 1) ermittelt wird. In dieses Feld wird auch gegebenenfalls der von dem Kunden gewünschte Toleranzwert eingegeben.

Ferner beinhaltet die Datenbank ein Feld zur Eingabe eines Stopp-Loss-Kurses sowie ein Feld zur Spezifizierung, ob eine Spekulationsfrist beachtet werden soll oder nicht.

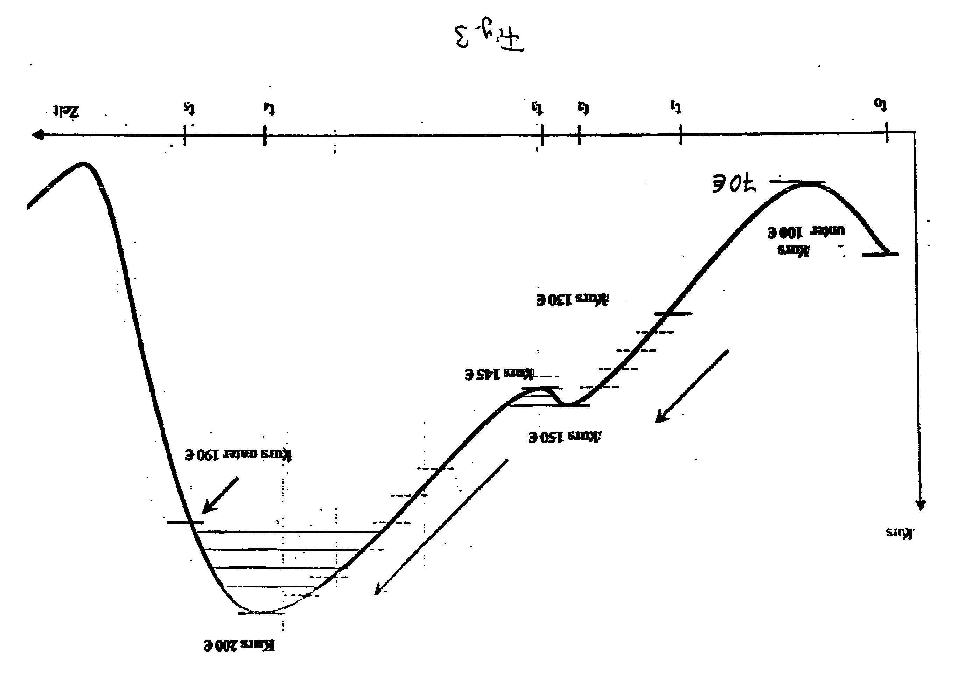

Die Figur 3 veranschaulicht die Arbeitsweise einer Ausführungsform des erfindungsgemäßen Verfahrens anhand des Kursverlaufs eines bestimmten Wertpapiers. Nach rechts ist die Zeit und nach oben der aktuelle Kurs für das Wertpapier aufgetragen. Zu einem Zeitpunkt $t_0$ wird eine bestimmte Stückzahl des Wertpapiers zu einem Kurs von beispielsweise 100 € über ein Anlageberaterfirma für einen Kunden gekauft.

Diesem Kauf liegt ein entsprechender Vertrag mit dem Kunden zu Grunde, in dem vereinbart worden ist, dass ein absolutes Renditeziel bezogen auf den Kursverlauf ausgewertet werden soll und das Kursgewinne mit einem Gewinn-Sicherungs-Stopp-Kurs abgesichert werden soll. Ein Stopp-Loss-Kurs ist nicht vereinbart worden; ferner ist auch nicht die Einhaltung einer Spekulationsfrist vereinbart worden. Die Kundendatenbank 3 (vgl. Figur 1 und Figur 2) dient zur Speicherung der betreffenden Vertragsparameter, die über die Nutzerschnittstelle 4 des Computers 1(vgl. Figur 1) eingegeben worden sind.

Als absolutes Renditeziel ist mit dem Kunden ein Kurs von 130 € vereinbart worden. Als Toleranzwert für die Abweichung vom Maximum des Kursverlaufs ist eine Schwankungstoleranz von 5% des absoluten Rendite-Ziels vereinbart worden.

Nach dem Kauf zum Zeitpunkt $t_0$ fällt der Kurs beispielsweise zunächst einmal, bis dass er wieder ansteigt. Zum Zeitpunkt $t_1$ hat der Kurs das absolute Renditeziel in Höhe von 130 € erreicht. Dieses wird von dem Programmmodul 15 festgestellt und das Programmmodul 9 wird gestartet (vgl. Figur 1).

Das erreichte Kursmaximum von 130 € minus der Toleranz von 5% (6,5 €) wird dann als Gewinn-Sicherungs-Stopp-Kurs gespeichert, d.h. in der Datenbank wird ein Stop-Kurs von 123,5 € eingetragen. In der nachfolgenden Zeit steigt der Kurs weiter an, so dass von dem Programmmodul 9 fortlaufend neue Gewinn-Sicherungs-Stopp-Kurse gespeichert werden, die jeweils den maximalen Kursstand abzüglich der Toleranz widerspiegeln.

Zum Zeitpunkt $t_2$ erreicht der Kurs seinen vorerst höchsten Wert von 150 € . Dieser Wert abzüglich der Toleranz von 5% dieses Wertes, d.h. 142,5 € , ist dann auch der aktuelle Gewinn-Sicherungs-Stopp-Kurs zu diesem Zeitpunkt $t_2$.

Danach fällt der Kurs wieder ab und erreicht zum Zeitpunkt $t_3$ einen Wert von 145 € . Wegen des abfallenden Kursverlaufs bleibt der Gewinn-Sicherungs-Stopp-Kurs von 142,5 € erhalten. Von dem Programmmodul 9 (vgl. Figur 1) wird dann geprüft, ob sich der Kursverlauf innerhalb des Toleranzwerts, das heißt der Schwankungstoleranz von 5% , d.h. oberhalb von 142,5 € bewegt. Da die Änderung hier nur 5 € beträgt, liegt die Schwankung innerhalb des Toleranzwerts, so dass kein Verkaufssignal generiert wird.

Nach dem Zeitpunkt $t_3$ steigt der Kurs wieder stetig bis zum Zeitpunkt $t_4$ an. Demzufolge wird auch der Gewinn-Sicherungs-Stopp-Kurs immer an den aktuellen Kurs angepasst. Nach dem Zeitpunkt $t_4$ fällt der Kurs von 200 € auf unter 190 € zum Zeitpunkt $t_5$ ab. Da der letzte neue Gewinn-Sicherungs-Stopp-Kurs bei 190 € (200 € abzüglich 5% Toleranz) liegt, ist nunmehr der Schwankungstoleranz in Höhe von 5% überschritten, so dass ein Verkaufssignal von dem System generiert wird.

Wenn der Kunde die Beachtung einer Spekulationsfrist wünscht, wird zusätzlich geprüft, ob der Zeitraum zwischen dem Zeitpunkt des Kaufs $t_0$ und des Verkaufs $t_5$ größer als die Spekulationsfrist ist; nur wenn dies der Fall ist, wird das Verkaufssignal generiert.

Wenn der Kunde die Beachtung eines Stopp-Loss-Kurs von zum Beispiel 80 € wünscht, so wird dieser Kurs in der Kundendatenbank 3 eingetragen und von dem Programmmodul 10 fortlaufend überwacht (vgl. Figur 1). In dem betrachteten Beispielsfall der Figur 3 hätte dies zur Folge, dass unmittelbar nach dem Kauf ein Verkaufssignal generiert wird, da der Kurs unter den Stopp-Loss-Kurs auf 70 € fällt.

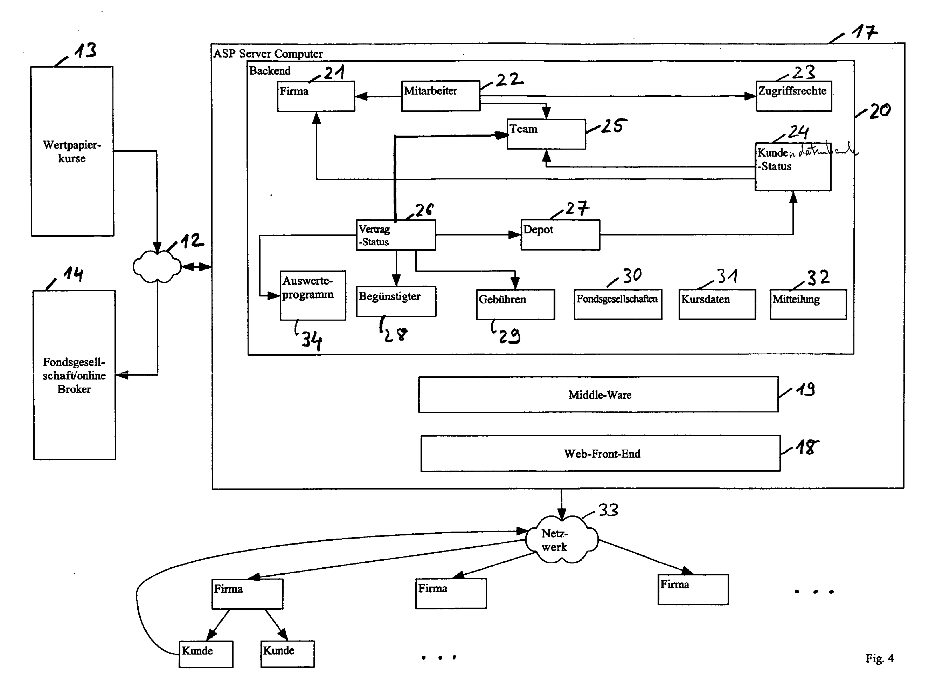

Die Figur 4 zeigt eine weitere Ausführungsform eines erfindungsgemäßen Computersystems, in der ein ASP Konzept realisiert ist.

Das Computersystem beinhaltet einen ASP Server-Computer 17, der - ähnlich wie in der Ausführungsform der Figur 1 - mit Server-Computern 13 und 14 über ein Netzwerk 12 zur Abfrage von Wertpapier-Kursen bzw. zur Ausgabe von Verkaufsaufträgen verbindbar ist.

Der ASP Server-Computer 17 beinhaltet ein Web-Front-End 18 zur Generierung von Web-Seiten, um eine Nutzerschnittstelle zur Verfügung zu stellen. Ferner beinhaltet der ASP Server-Computer 17 Middle-Ware 19, das heißt Software-Komponenten, die über die von dem Web-Front-End 18 zur Verfügung gestellte Nutzerschnittstelle angesprochen werden. Ferner beinhaltet der ASP Server-Computer 17 ein Back-End 20 mit einem Datenbanksystem. Das Datenbanksystem, zum Beispiel eine SQL Datenbank, dient zur Speicherung von Zustands-Informationen.

Hierbei sind die Datenbank-Strukturen durch die Objekte der Middle-Ware gekapselt, d.h. jede Nutzer-Aktion wird auf der Middle-Ware (den Objekten) ausgeführt und auf Konsistenz und Fehler überprüft. Sobald eine Zustandsänderung von der Middle-Ware akzeptiert wird, wird dieser Zustand in der Datenbank gespeichert. Somit können Zustände von Webseite zu Webseite übernommen werden, da im Unterschied zu klassischen Programmen jede Generierung einer Webseite einen neuen Server-Prozess erzeugt, der über die "Historie" der Nutzer-Interaktionen per se keine Informationen hat.

Der Workflow soll des Weiteren eng an den Arbeitsfluss der Vermögensberater angepasst werden, so dass die Aktionen, die der Berater mit dem Kunden durchführt und vereinbart hat, möglichst nah in der Datenbank abgebildet werden können. Hierzu ist es notwendig, alle unterstützten Einheiten als Datenbank-Objekt zu modellieren und mit einem entsprechendem Objekt in der Middleware zu kapseln.

Diese Modellierung erlaubt z.B. die Definition von Teams (Sachbearbeiter & Berater), die gemeinsam Verträge sowie Kunden in dem System betreuen. Auf Grund dieser Flexibilität wird jedem "Objekt", z.B. jedem Vertrag oder Kunden, Parameter zugeordnet, die es im nachhinein erlauben, nachzuvollziehen, wer welches Objekt modifiziert hat. Zudem können bestimmte Informationen anhand dieser Zusatzparameter nur für bestimmte Einheiten, z.B. die Mitglieder eines Teams, die einen speziellen Kunden betreuen, für andere gesperrt werden.

Nachfolgend wir die grundsätzliche Objekt-Modellierung beschrieben.

In der ASP-Lösung können verschiedene Firmen, die durch Datenbank-Objekte repräsentiert werden, integriert werden. Jeder Firma sind Angestellte zugeordnet. Hierbei wird jedem Angestellten ein Zugriffsrecht zugeordnet. Dieses Zugriffsrecht ist entweder ASP-Administrator, Firmenadministrator, Berater oder Sachbearbeiter.

**ASP-Administrator**

Der ASP-Administrator ist verantwortlich für den Betrieb des Systems und darf generell jeden Prozess eines Lizenzkunden überwachen sowie in Zustände eingreifen. So darf ein ASP-Administrator:

• Firmen hinzufügen, löschen oder modifizieren

• Mitarbeiter von Firmen hinzufügen, löschen und modifizieren

- Firmenstatistiken bezüglich der Kunden und der abgeschlossenen Kontrakte erstellen

- abgeschlossene Kontrakte anzeigen lassen

- Kundendaten einsehen, etc.

**Firmen-Administrator**

Der Firmen-Administrator ist verantwortlich für alle Arbeitsabläufe innerhalb einer Firma und dient zudem als Kontrollinstanz bezüglich der Kundenbeziehungen: Der Firmen-Administrator darf zum Beispiel:

- Mitarbeiter seiner Firma hinzufügen, löschen oder deren Stammdaten ändern,

- darf alle Kundenverträge seiner Firma einsehen,

- Statistiken über Mitarbeiter (und deren Kunden) seiner Firma einsehen und

- muss beantragte Überwachungsverträge gegenzeichnen sowie

- Anmeldungen von Kunden seiner Firma bestätigen.

Üblicherweise ist der Geschäftsführer einer Beratungsfirma als Firmenadministrator eingetragen.

**Berater**

Der Berater hat direkten Kundenkontakt und bietet Gewinn-Sicherungs-Verträge, welche später in das System eingefügt werden, seinem (End-)Kunden an. Der Berater darf

- Kunden zur Aufnahme in das System anmelden,

- darf die Löschung von Kunden beantragen sowie

- Vertragsanmeldungen sowie Vertragsauflösungen bestätigen.

Generell hat der Berater nur Zugriff auf seine eigenen Kunden.

**Sachbearbeiter**

Der Sachbearbeiter ist mit einem Berater verknüpft und bereitet generell Verträge des Endkunden vor, die durch den Berater vermittelt wurden und vom Berater im System bestätigt werden müssen.

**Teambildung**

Sachbearbeiter und Berater können von der Firmenadministration als Teams zusammengeschlossen werden. Alle Informationen, die einen Teil des Teams betreffen werden hierdurch dem ganzen Team zur Verfügung gestellt.
Eine solche ASP-Lösung erlaubt die Verwaltung mehrstufiger Zugriffshierarchien und ermöglicht es somit, dass an einer zentralen Instanz, mehrere Firmen mit beliebig vielen Kunden und Mitarbeitern sowie Kontrakten verwaltet werden können. Zusätzlich wird ein Arbeitsfluss definiert, der klare Verantwortung der Nutzer im Umgang mit dem System zuweist.
Hiermit wird sichergestellt, dass alle Verkaufssignale berücksichtigt werden können und abgeschlossene Verträge mit der daraus folgenden Rechts- bzw. Verantwortungssituation, die üblicherweise außerhalb des Systems verwaltet werden, aber nicht verwaltet werden müssen, übereinstimmen. Durch die umfassende Speicherung aller notwendigen Parameter wird außerdem gewährleistet, dass alle Investments, die in diesem System abgelegt sind, einer umfassenden Auswertung unterzogen werden können. Hierzu zählen Auswertungen, die sich auf verschiedene Hierarchien (Firma, Mitarbeiter, Endkunde) beziehen können.
In der Ausführungsform der Figur 4 stützt sich das Web-Front-End 18 auf HTML sowie vom Server generierten dynamischen Webseiten (CGI-Programme). Dieses entspricht dem klassischen Client-Server- Modell in welchem ein Client (in diesem Fall der Berater) jeweils über ein User-Interface Aktionen auf dem Server auslöst. In diesem System muss der Client nur über einen Computer mit einer Internetverbindung sowie einem Browser (HTML) verfügen. Die Aktionen auf dem Server werden vom Nutzer durch Aufruf von Webseiten (via URL) ausgelöst. Somit ist der gesamte Programmablauf auf dem Server implementiert. Der Server besteht im Wesentlichen aus fünf verschiedenen Modulen : Firmen-Einheit, Mitarbeiter-Einheit, Kundeneinheit und der Vertrags-Einheit sowie einem Scanner (Hintergrundprozess) der die eingegeben Verträge hinsichtlich etwaiger Verkaufssignale überwacht.

Im System können beliebig viele Firmen in der Firmen-Einheit verwaltet werden. Jede Firma beinhaltet Mitarbeiter (die Client-Nutzer), die dieser Firma zugeordnet sind. Generell können diese Mitarbeiter nur auf Daten ihrer zugeordneten Firma zugreifen. Den Mitarbeiter sind wiederum Kunden zugeordnet. Mitarbeiter unterscheiden sich durch vier verschiedene mögliche Zugriffsrechte (siehe oben). Anhand dieser zugewiesenen Rechte wird vom Server entschieden, welcher Programm-Fluss und damit welche Informationen zum Client (dem Mitarbeiter) zur Verfügung gestellt werden.

Von der Firmenadministration können Paare von Mitarbeitern (Berater und Sachbearbeiter) gebildet werden, die jeweils zusammen Kunden sowie Verträge betreuen. Jedem Mitarbeiter sind Kunden aus der Kundeneinheit zugeordnet. Jeder Mitarbeiter kann nur die Ihm zugewiesenen Kunden oder Verträge einsehen oder modifizieren. Jedem Kunden sind Depots zugeordnet, die wiederum die vom Berater vermittelten Verträge (also Fondsanlagen + Absicherungsstrategien) enthalten.

Somit sind die verschiedenen Einheiten streng hierarchisch orientiert.

Durch Angabe der Firma, eines Nutzernamens und eines Passwortes kann ein Client (Mitarbeiter) sich beim System anmelden. Der Server kann anhand der Firmen- und Mitarbeiter-Einheit eine eindeutige Identifizierung vornehmen. Zudem wird anhand der Priorität (Zugriffsrechte) des Mitarbeiters die Arbeitsumgebung angepasst.

Da insbesondere die Kundendaten und die Vertragseintragungen in den jeweiligen Modulen mit Statusinformationen versehen sind, kann nach der Anmeldung des Mitarbeiters eine Arbeitsliste vom Server erstellt werden. Sachbearbeiter und Berater werden noch nicht bestätigte Kunden- sowie Vertragseintragungen (die noch zu bestätigen sind) präsentiert sowie aktuelle von der Scanner-Einheit zur Überwachung aufgenommene Verträge sowie signalisierte Verkaufspositionen.

Firmenadministratoren bekommen im Gegensatz dazu noch zu bestätigende Kunden- und Vertragsanmeldungen und Kundenlöschungen bzw. Vertragsaufhebungen präsentiert. Zusätzlich sieht der Firmenadministrator Mitteilungen über Umgehungen des Vier-Augen-Prinzips seiner Mitarbeiter, d.h. wann immer Kontrakt- oder Kundenanmeldungen durch den Berater selbst bestätigt werden, sendet das System eine Nachricht an den Firmenadministrator.

In dem betrachteten Beispielsfall der Figur 4 beinhaltet des Back-End 20 eine Firmen-Einheit 21 zur Speicherung der Stammdaten von verschiedenen Firmenkunden des ASP. Bei den Firmen handelt es sich typischerweise um Vermögens- und Anlageberatungsgesellschaften.

Ferner beinhaltet das Back-End 20 eine Mitarbeiter-Einheit 22 zur Speicherung von Stammdaten von Mitarbeitern sowie von Zugangsdaten wie User-Name und Passwort sowie einem Zeiger auf die Zugriffsrechte-Einheit 23 zur Festlegung der Rolle des betreffenden Mitarbeiters. Jeder der in der Mitarbeiter 22 erfassten Mitarbeiter ist dabei einer bestimmten Firma der Firmen-Einheit 21 zugeordnet.

Der ASP-Administrator hat die Möglichkeit eine Firma zu der Firmen-Einheit 21 hinzuzufügen sowie einen Firmen-Administrator für diese Firma als Mitarbeiter in der Mitarbeiter-Einheit 22 einzugeben. Dabei wird ein Zeiger auf die Zugriffsrechte als Firmen-Administrator für den betreffenden Mitarbeiter der Firma generiert. Der Firmen-Administrator hat dann seinerseits die Möglichkeit Mitarbeiter seiner Firma zu der Mitarbeiter-Einheit 22 hinzuzufügen und Zugriffsrechte zu vergeben.

Das Back-End 20 hat ferner eine Kundeneinheit 24. Jeder Kundeneintrag enthält neben den Stammdaten die Firmenzugehörigkeit, die Zuordnung zu einem Team (Tupel von Berater und Sachbearbeiter) der Team-Einheit 25, die Statusinformation sowie den Mitarbeiter, welcher den Kundendatensatz angelegt und denjenigen Mitarbeiter, welcher den Kundendatensatz zuletzt modifiziert hat. Ein Kundendatensatz kann generell nur von Mitarbeiter abgerufen werden, die zu dem angegebenen Team gehören oder Administrator-Berechtigung besitzen. Das bedeutet, dass die Kunden innerhalb einer Firma zwischen den verschiedenen Beratern getrennt sind.

Die Status-Information gibt an, was mit dem Kundendatensatz im Arbeitsfluss geschehen soll. REGISTERED markiert den Datensatz als eingegeben und signalisiert dem System, dass dieser Datensatz dem Firmenadministrator zur Korrektur oder Bestätigung angezeigt werden soll. Korrigiert oder bestätigt dieser diesen Datensatz wird die Statusinformation auf CONFIRMED hochgesetzt. Kunden können nur Verträge (Fondsanlagen) zugeordnet werden, wenn diese Statusinformation CONFIRMED oder CHANGED besitzen. Dies Statusinformation wird auf CHANGED gesetzt, wenn der Kundendatensatz manipuliert wurde. Wird von einem Berater oder Sachbearbeiter Kunden zur Löschung angemeldet, wird die Status-Information auf CHECKOUT gesetzt. Dem Kunden können nun keine Verträge, etc. mehr zugeordnet werden. Diese beantragte Kundenlöschung wird wiederum dem Firmenadministrator vorgelegt, der diese bestätigen kann (CHECKOUTCONFIRMED).

Ferner beinhaltet das Back-End 20 eine Vertrags-Einheit 26. Wie oben beschrieben werden verschiedene Vertragsmodalitäten vom System unterstützt. Die Vertrags-Einheit beinhaltet verschiedene Parameter, die in bestimmten Kombinationen die jeweiligen Vertragsvarianten beschreiben.

Alle Verträge werden einem Depot zugewiesen und beinhalten eine Wertpapierkennnummer, die sich auf das zu kaufende Wertpapier bezieht. Des weiteren ist dem Vertrag wiederum einer Firma sowie einem Team dieser Firma zugeordnet, welches bei Vertragsauflösung vom System benachrichtigt wird. Verträge sind analog zu Kunden mit einer Statusinformation sowie mit einer Referenz auf den statusändernden Mitarbeiter ausgestattet. Wird ein Vertrag beim System von einem Mitarbeiter angemeldet (also parallel der Geschäftsführung zur Unterschrift vorgelegt) so wird der Vertrag entsprechend mit REGISTERED markiert. Als REGISTERED markierte Verträge werden Firmadministratoren zur Bestätigung vom System vorgelegt. Durch die Bestätigung des Firmenadministrators wird der Vertrag als CONFIRMED gekennzeichnet.

Es werden nur Verträge überwacht, die eine höhere Priorität als REGISTERED haben.

Diese zu überwachenden Verträge werden vom Überwachungsmodul in Abhängigkeit des Typs der Kontrakte zu bestimmten Zeitpunkten geprüft. Erreichen z.B. Kontrakte ihr Renditeziel so wird der Kontrakt mit einem Stopp-Kurs ausgestattet sowie mit der Statusinformation ACTIVATED gekennzeichnet. Kontrakte die durch ACTIVATED gekennzeichnet wurden, werden dem jeweiligen Team als aktiviert signalisiert, so dass der Sachbearbeiter oder der Berater eine Mitteilung an den Kunden versenden kann (automatische Versendung einer Benachrichtigung ist nicht ausgeschlossen). Bestätigt ein Team-Mitglied diese Vorlage des Systems so wird der Status MONITORED gesetzt. Gewinnsicherungen können nur dann einsetzen, wenn der Status des Kontraktes ACTIVATED oder MONITORED ist.

Ergibt die Prüfung, dass der Kontrakt zum Verkauf gestellt werden muss, weil z.B. ein Gewinn-Sicherungs Stopp-Kurs unterschritten wurde (Gewinnsicherung) so markiert das System diesen Kontrakt mit TERMINATED. Kontrakte mit dieser Statusinformation werden den . Team-Mitgliedern wieder angezeigt. Die Teammitglieder müssen, sobald die Fondsanteile verkauft wurden, diese Benachrichtigung bestätigen, so dass der Kontrakt als CHECKOUT markiert wird und der Firmenadministration zur Bestätigung vorgelegt wird.

Ein Vertrag der Vertrags-Einheit 26 kann mit einem Depot der Depot-Einheit 27 verknüpft sein sowie mit der Begünstigten-Einheit 28 und der Gebühren-Einheit 29. Die Begünstigten-Einheit 28 dient zur Speicherung der durch einen Vertrag begünstigten Personen, die Gebühren-Einheit 29 dient zur Abrechnung der von einer Firma erhobenen Gebühren beispielsweise für die Tätigung eines Verkaufs.

Das Back-End 20 beinhaltet ferner eine Fondsgesellschaften-Einheit 30 zur Speicherung der Stammdaten von Fondsgesellschaften, über die Verkäufe zu tätigen sind, sowie eine Kursdaten-Einheit 31 zur Speicherung von aktuellen Kursdaten, die von dem Server-Computer 13 übermittelt worden sind.

Die Mitteilungs-Einheit 32 des Back-Ends 20 dient zur Generierung von internen Mitteilungen, wenn beispielsweise ein Mitarbeiter unter Umgehung des Vier-Augen-Prinzips einen Vertrag selbst bestätigt hat.

Die Kunden 46 der Firmen können - wie die Firmen über deren Computer 45 - über ein Netzwerk 33, beispielsweise das Internet, mit dem ASP Server-Computer 17 kommunizieren. Ferner kann der ASP Server-Computer 17 so eingerichtet sein, dass auch die Kunden der betreffenden Firmen unmittelbar über das Netzwerk 33 mit dem ASP Server-Computer 17 kommunizieren können, um beispielsweise den Bearbeitungsstatus, aktuelle Kursdaten und Verkaufssignale abzufragen.

Das Auswerteprogramm 34 greift u.a. auf die Vertrags-Einheit 26 zu und hat eine analoge Funktionalität wie das Auswerteprogramm 6 der Ausführungsform der Figur 1.

Anhang

Im Weiteren ist eine Datenbankbeschreibung der verschiedenen Einheiten des Back-End 20 angegeben:

Firmen-Einheit

```
DROP       SEQUENCE    seq_dapt_company;
DROP       TABLE       dapt_company;
CREATE     TABLE       dapt_company
           (

           id                          INT4  PRIMARY KEY,
           name                        TEXT  NOT NULL,
```

```
                  street1                    TEXT   NOT NULL,
                  street2                    TEXT,
                  city                       TEXT   NOT NULL,
                  state                      TEXT,
                  zip                        INT4   NOT NULL,
                  country                    TEXT   NOT NULL,
                  phone                      TEXT   NOT NULL,
                  fax                        TEXT,
                  email                      TEXT,
                  www                        TEXT,
                  resources                  TEXT,
                  contractSequence           INT4 DEFAULT(0),

                  UNIQUE( name, street1, zip, city )
          );
          CREATE        SEQUENCE    seq_dapt_company;
```

In der Datenbank können Firmenadressen gespeichert werden. Diese Firmenadressen können nur durch den ASP-Administrator eingesehen, modifiziert, angelegt oder gelöscht werden.

Zugriffsrechte-Einheit

```
      DROP   TABLE dapt_permission;
      CREATE        TABLE dapt_permission
      (

           id            INT4   PRIMARY KEY,
           remark        TEXT   NOT NULL
      );

      INSERT INTO dapt_permission (id,remark) VALUES (0, 'ASP Administrator');
      INSERT INTO dapt_permission (id,remark) VALUES (1, 'Company Administrator');
      INSERT INTO dapt_permission (id,remark) VALUES (2, 'Customer Advisor');
      INSERT INTO dapt_permission (id,remark) VALUES (3, 'Customer User');
```

Mitarbeiter-Einheit

```
DROP          SEQUENCE    seq_dapt_employee;
DROP          TABLE       dapt_employee;
CREATE        TABLE dapt_employee
(

        id                              INT4    PRIMARY KEY,

        firstName               TEXT    NOT NULL,
        lastName                TEXT    NOT NULL,
        title                   TEXT    ,
        gender_id               INT4    REFERENCES dapt_gender(ID) NOT NULL,
        dateOfBirth             DATE    NOT NULL,

        company_id              INT4    REFERENCES dapt_company(id) NOT NULL,
        ident                   TEXT    ,
        phone                   TEXT    NOT NULL,



        fax                             TEXT    ,
        email                   TEXT    ,
        www                             TEXT    ,

        username                TEXT    NOT NULL,
        password                TEXT    NOT NULL,
        permission_id    INT4   REFERENCES   dapt_permission  NOT NULL,
        create                  DATE    DEFAULT CURRENT_DATE,
        lastLogin               INT4    ,
        sessionKey              TEXT    ,

        substitute_id    INT4   DEFAULT(-1),
        jobTitle         TEXT,

        UNIQUE( company_id, username )

);
CREATE                SEQUENCE    seq_dapt_employee;
```

Jeder Mitarbeiter ist genau einer Firma in der Firmen-Einheit (*company_id*) zugeordnet. Durch diese Zuordnung wird geregelt, dass nur Kundendatensätze, die zu dieser Firma gehören, sichtbar sind. Des weiteren ist der Mitarbeiter mit Zugriffsrechten (*permission_id*) ausgestattet (siehe Beschreibung oben). Diese Zugriffsrechte regeln, welche Informationen der Mitarbeiter vom System angeboten bekommt. So kann z.B. ein Sachbearbeiter (permission_id=3) keine Statistiken über die Firma selbst (Anzahl der Verträge, Anzahl der Mitarbeiter, Verträge pro Mitarbeiter, etc) einsehen. Um Vertretungen von Mitarbeiter zu ermöglichen, wird weiter eine Referenz auf einen anderen Mitarbeiter gehalten. Sobald ein Mitarbeiter sich abmeldet und eine Vertretung bestimmt, werden alle Informationen auch der Vertretung zur Verfügung gestellt.

Zur Authentisierung ist jedem Mitarbeiter ein Benutzername sowie ein Passwort zugeordnet. Bei der Anmeldung zum System wird der Benutzer aufgefordert, den Firmennamen sowie Benutzernamen und das Passwort einzugeben. Die Server-Anwendung prüft aus diesen Angaben, ob es einen Nutzer, der zur angegebenen Firma gehört, gibt und verifiziert hernach die Passwortangabe. Stimmen diese eindeutigen Angaben kann der Mitarbeiter identifiziert werden. In der Datenbank wird ein Sitzungsschlüssel generiert, der den angemeldeten Nutzer eindeutig identifiziert.

Begünstigte

```
DROP   TABLE dapt_beneficiary_mode;
CREATE       TABLE dapt_beneficiary_mode
(

        id              INT4   PRIMARY KEY,
        remark          TEXT   NOT NULL
);

INSERT INTO dapt_beneficiary_mode (id,remark) VALUES (0, 'SINGLE'   );
INSERT INTO dapt_beneficiary_mode (id,remark) VALUES (1, 'PAIR'     );
INSERT INTO dapt_beneficiary_mode (id,remark) VALUES (2, 'COMPANY');


DROP          SEQUENCE    seq_dapt_beneficiary;
DROP          TABLE       dapt_beneficiary;
CREATE        TABLE       dapt_beneficiary
(

        id                          INT4   PRIMARY KEY,

        mode_id                     INT4   REFERENCES dapt_customer_mode(id) DEfAULT(0),

        firstName                   TEXT   NOT NULL,
        lastName                    TEXT   NOT NULL,
        title                       TEXT,
        gender_id                   INT4   REFERENCES dapt_gender(ID) NOT NULL,
        dateOfBirth                 DATE   NOT NULL,

        firstName2                  TEXT   ,
        lastName2                   TEXT   ,
        title2                      TEXT   ,
        gender_id2                  INT4   REFERENCES dapt_gender(ID) DEFAULT(0),
        dateOfBirth2                DATE   DEfAULT CURRENT_DATE,

        accountNumber               INT4   NOT    NULL,
        bankIdentificationCode  INT4   NOT NULL,
        bankDetail                  TEXT   NOT NULL,

        company_id                  INT4   REFERENCES dapt_company(id) NOT NULL
);

CREATE        SEQUENCE    seq_dapt_beneficiary;
```

Auszahlungen von Anlagen können generell auf anderen Konten (den Begünstigten) ausgezahlt werden. Jedem Vertrag ist somit nicht nur ein Kunde sondern immer auch ein Begünstigter zugordnet.

Kundeneinheit

```
DROP   TABLE dapt_customer_status;
CREATE       TABLE dapt_customer_status
(
```

```
        id              INT4   PRIMARY KEY,
        remark  TEXT   NOT NULL
);

INSERT INTO dapt_customer_status (id,remark) VALUES (0, 'REGISTERED'              );
INSERT INTO dapt_customer_status (id,remark) VALUES (1, 'CONFIRMED'               );
INSERT INTO dapt_customer_status (id,remark) VALUES (2, 'CHECKOUT'                );
INSERT INTO dapt_customer_status (id,remark) VALUES (3, 'CHECKOUTCONFIRMED'       );
INSERT INTO dapt_customer_status (id,remark) VALUES (4, 'CHANGED'                 );

DROP   TABLE dapt_customer_mode;
CREATE        TABLE dapt_customer_mode
(

        id              INT4   PRIMARY KEY,
        remark  TEXT   NOT NULL
);

INSERT INTO dapt_customer_mode (id,remark) VALUES (0, 'SINGLE'      );
INSERT INTO dapt_customer_mode (id,remark) VALUES (1, 'PAIR');
INSERT INTO dapt_customer_mode (id,remark) VALUES (2, 'COMPANY'   );

DROP          SEQUENCE     seq_dapt_customer;
DROP          TABLE        dapt_customer;
CREATE        TABLE        dapt_customer
(

        id                      INT4    PRIMARY KEY,

        mode_id                 INT4    REFERENCES dapt_customer_mode(id) DEfAULT(0),

        firstName               TEXT  NOT NULL,
        lastName                TEXT  NOT NULL,
        title                   TEXT  ,
        gender_id               INT4  REFERENCES dapt_gender(ID) NOT NULL,
        dateOfBirth             DATE  NOT NULL,

        firstName2              TEXT  ,
        lastName2               TEXT  ,
        title2                  TEXT  ,
        gender_id2              INT4  REFERENCES dapt_gender(ID) DEFAULT(0),
        dateOfBirth2            DATE  DEfAULT CURRENT_DATE,

        company_id              INT4  REFERENCES dapt_company(id) NOT NULL,
        team_id                 INT4  REFERENCES dapt_team(id)      NOT NULL,
        status_id               INT4  REFERENCES dapt_customer_status(id)   NOT
NULL,
        street1                 TEXT  NOT NULL,
        street2                 TEXT  ,
        city                    TEXT  ,
        state                   TEXT  ,
        zip                     INT4  NOT NULL,
        country                 TEXT  NOT NULL,
        phone                   TEXT  ,
        fax                     TEXT  ,
        email                   TEXT  ,
        www                     TEXT  ,

        accountNumber           INT4  DEFAULT(-1),
        bankIdent               INT4  DEFAULT(-1),
        bankDetail              TEXT,
```

```
        creator_id              INT4   REFERENCES dapt_employee(id)NOT     NULL,
        createdDate             DATE   NOT NULL,
        createdTime             TIME   NOT NULL,

        modifier_id             INT4   REFERENCES dapt_employee(id)NOT NULL,
        modifiedDate            DATE   NOT NULL,
        modifiedTime            TIME   NOT NULL
);

CREATE    SEQUENCE   seq_dapt_customer;
```

Einheit zur Speicherung von Fondsgesellschaften

```
DROP        SEQUENCE   seq_dapt_company_address;
DROP        TABLE      dapt_company_address;
CREATE      TABLE          dapt_company_address
(
        id                      INT4   PRIMARY KEY,
        company_id              INT4   REFERENCES dapt_company(ID) NOT NULL,
        name                    TEXT   NOT NULL,
        street1                 TEXT   NOT NULL,
        street2                 TEXT,
        city                    TEXT   NOT NULL,
        state                   TEXT,
        zip                            INT4    NOT NULL,
        country                 TEXT   NOT NULL,
        phone                   TEXT   NOT NULL,
        fax                            TEXT,
        email                   TEXT,
        www                            TEXT,
        remark                  TEXT,
        creator_id              INT4   REFERENCES dapt_employee(id)NOT     NULL,
        createdDate             DATE   NOT NULL,
        createdTime             TIME   NOT NULL,

        modifier_id             INT4   REFERENCES dapt_employee(id)NOT NULL,
        modifiedDate            DATE   NOT NULL,
        modifiedTime            TIME   NOT NULL
);

CREATE        SEQUENCE   seq_dapt_company_address;
```

Depot-Einheit

```
DROP  SEQUENCE seq_dapt_deposit;
DROP  TABLE   dapt_deposit;
CREATE TABLE   dapt_deposit
(
        id                      INT4 PRIMARY KEY,
        customer_id             INT4 REFERENCES dapt_customer(id) NOT NULL,
        name                    TEXT NOT NULL,
        depositAccountNumber    INT4 NOT NULL,
        bankIdentificationCode  INT4 NOT NULL,
        bankDetail              TEXT NOT NULL,
        UNIQUE (customer_id, depositAccountNumber, bankIdentificationCode )
```

```
                                                  );

                              CREATE SEQUENCE seq_dapt_deposit;
```

Jedem Kunden können beliebige Depots zugewiesen werden. Die Depots werden üblicherweise (abseits vom System) parallel vom Kunden selbst schriftlich beantragt. Diese Schriftdokumente liegen dem Berater vor. Wertpapiere werden in diesem Depot eingebucht.

Gebühren-Einheit

```
        DROP   SEQUENCE      seq_dapt_fee;
        DROP   TABLE         dapt_fee;
        CREATE    _   TABLE dapt_fee
        (

                id            INT4   PRIMARY KEY,
                company_id    INT4   REFERENCES dapt_company(id) NOT NULL,
                name          TEXT   NOT NULL,
                perAnnum      INT4   NOT NULL,
                fee                  FLOAT NOT    NULL,
                feeMinimum    FLOAT NOT     NULL,

                creator_id    INT4   REFERENCES dapt_employee(id) NOT NULL,
                createdDate   DATE   NOT NULL,
                createdTime   TIME   NOT NULL,

                modifier_id   INT4   REFERENCES dapt_employee(id),
                modifiedDate         DATE,
                modifiedTime         TIME,

                UNIQUE( name, fee, feeMinimum, perAnnum, company_id )

        );
        CREATE SEQUENCE seq_dapt_fee;
```

Jeder Firma sind Gebührenmodelle zugeordnet. Diese Gebührenmodelle können minimale Beträge enthalten und weiter als jährlich zu zahlende Gebühren markiert werden. Jeder Absicherungsvertrag wird mit einem Gebühren-modell verknüpft.

Vertrags-Einheit

```
            DROP   TABLE dapt_return_mode;
            CREATE      TABLE dapt_return_mode
            (

                id              INT4   PRIMARY KEY,
                remark  TEXT   NOT NULL
            );
```

```
INSERT INTO dapt_return_mode (id,remark) VALUES (0, 'ABSOLUTE');
INSERT INTO dapt_return_mode (id,remark) VALUES (1, 'RELATIVE');

DROP   TABLE dapt_contract_status;
CREATE          TABLE dapt_contract_status
(

        id              INT4   PRIMARY KEY,
        remark  TEXT   NOT NULL
);

INSERT INTO dapt_contract_status (id,remark) VALUES (0, 'REGISTERED'              );
INSERT INTO dapt_contract_status (id,remark) VALUES (1, 'CONFIRMED'               );
INSERT INTO dapt_contract_status (id,remark) VALUES (2, 'ACTIVATED'               );
INSERT INTO dapt_contract_status (id,remark) VALUES (3, 'MONITORED'               );
INSERT INTO dapt_contract_status (id,remark) VALUES (4, 'TERMINATED'              );
INSERT INTO dapt_contract_status (id,remark) VALUES (5, 'CHECKOUT'                );
INSERT INTO dapt_contract_status (id,remark) VALUES (6, 'CHECKOUTCONFIRMED'       );

DROP  SEQUENCE      seq_dapt_team;
DROP  TABLE         dapt_team;
CREATE TABLE        dapt_team
(
        id                      INT4    PRIMARY KEY,
        name                    TEXT    DEFAULT('--'),
        advisor_id              INT4    REFERENCES dapt_employee(id) NOT NULL,
        user_id                 INT4    REFERENCES dapt_employee(id) NOT NULL,
        UNIQUE( advisor_id, user_id )
);

CREATE SEQUENCE seq_dapt_team;


DROP  SEQUENCE seq_dapt_contract;
DROP  TABLE   dapt_contract;
CREATE TABLE   dapt_contract
(
 id             INT4   PRIMARY KEY,
 deposit_id     INT4   REFERENCES dapt_deposit(id) NOT NULL,
 nsin                   INT4   NOT NULL,
 reference              INT4   NOT NULL,

 beneficiary_id INT4           REFERENCES   dapt_beneficiary(id) NOT NULL,
 broker_id              INT4   REFERENCES   dapt_team(id) NOT NULL,
 company_id             INT4   REFERENCES   dapt_company(id) NOT NULL,
 speculativePeriod      INT4,

 numberAssets           FLOAT CHECK (numberAssets>=0),
 purchaseDate           DATE   NOT NULL,
 purchaseTime           TIME   NOT NULL,
 purchasePrice          FLOAT NOT NULL CHECK (price>=0),

 activation             FLOAT ,
 activationMode_id      INT4   REFERENCES dapt_return_mode,

 activated              INT4,
 activationDate         DATE   NOT NULL,
 activationTime         TIME   NOT NULL,

 safeGuard              FLOAT NOT    NULL,
 safeGuardMode_id       INT4   REFERENCES   dapt_return_mode(id),
 safeGuardFee_id        INT4   REFERENCES   dapt_fee(id) NOT NULL,
```

```
StoppLoss                        FLOAT NOT    NULL,
StoppLossMode_id                 INT4   REFERENCES  dapt_return_mode(id),
StoppLossFee_id        INT4              REFERENCES  dapt_fee(id),

price                            FLOAT NOT NULL,
priceDate                        DATE  NOT NULL,
priceTime                        TIME  NOT NULL,

threshold                        FLOAT NOT NULL,
thresholdDate                    DATE  NOT NULL,
thresholdTime                    TIME  NOT NULL,

status_id                        INT4   REFERENCES dapt_contract_status DEFAULT(0),
statusDate                       DATE  NOT NULL,
statusTime                       TIME  NOT NULL,
statusEmployee_id                INT4   REFERENCES  dapt_employee(id) NOT NULL,

systemReference                  INT4   NOT NULL,
systemDate                       DATE  NOT NULL,
systemTime                       TIME  NOT NULL,

volume                           FLOAT NOT NULL,

salePrice                        FLOAT,
saleDate                         DATE,
saleTime                         TIME,

contractNumber INT4    DEFAULT(-1)

);

CREATE SEQUENCE seq_dapt_contract;
```

## Kursdaten-Einheit

```
DROP   SEQUENCE seq_dapt_quote;
DROP   TABLE   dapt_quote;

CREATE TABLE   dapt_quote
(
        id              INT4 NOT NULL,
        nsin            INT4 PRIMARY KEY,
        reference       INT4 NOT NULL,
        name            TEXT NOT NULL,

        price           FLOAT NOT NULL CHECK(price>= 0),
        date            DATE NOT NULL,
        time            TIME NOT NULL,

        UNIQUE( id, nsin, reference )
);


CREATE SEQUENCE seq_dapt_quote;
```

## Mitteilungs-Einheit

```
DROP   SEQUENCE seq_dapt_notification;
DROP   TABLE   dapt_notification;
```

```
CREATE TABLE   dapt_notification
(
        id              INT4 PRIMARY KEY,
        target_id       INT4 REFERENCES dapt_permission(id) NOT NULL,
        company_id      INT4 REFERENCES dapt_company(id) NOT NULL,
        message         TEXT NOT NULL,
        link            TEXT NOT NULL,
        date            DATE NOT NULL,
        time            TIME NOT NULL

);

CREATE SEQUENCE seq_dapt_notification;
```

Sachbearbeiter und Berater können Verträge oder Kundenanmeldungen selbst bestätigen, ohne eine Bestätigung des Firmenadministrators abwarten zu müssen. Der Firmenadministrator wird durch eine Mitteilung von dieser Umgehung des eigentlichen Arbeitsablaufes in Kenntnis gesetzt.

Bezugszeichenliste

1    Computer
2    Kursdatenbank
3    Kundendatenbank
4    Nutzerschnittstelle
5    Monitor
6    Auswerteprogramm
7    Programmmodul
8    Programmmodul
9    Programmmodul
10   Programmmodul
11   Programmmodul
12   Netzwerk
13   Server-Computer
14   Server-Computer
15   Programmmodul
16   Programmmodul
17   ASP Server-Computer
18   Web-Front-End
19   Middle-Ware
20   Back-End
21   Firmen-Einheit
22   Mitarbeiter-Einheit
23   Zugriffsrechte-Einheit
24   Kundeneinheit
25   Team-Einheit
26   Vertrags-Einheit
27   Depot-Einheit
28   Begünstigten-Einheit
29   Gebühren-Einheit
30   Fondsgesellschaften-Einheit
31   Kursdaten-Einheit
32   Mitteilungs-Einheit
33   Netzwerk
34   Auswerteprogramm

45     Computer
46     Kunde

**Patentansprüche**

1. Computersystem zur Sicherung von Kursgewinnen von Aktien- und/oder Wertpapieranlagen, mit

   - Mitteln (7, 15, 16; 34) zum elektronischen Speichern eines Renditeziels für eine gekaufte Aktien- oder Wertpapiergattung,

   - Mitteln (2; 34) zum elektronischen Erfassen des aktuellen Kurses der Aktien- oder Wertpapiergattung,

   - Mitteln (9, 11; 34) zum Errechnen der Rendite und Vergleichen der berechneten Rendite mit dem Renditeziel, wobei die Mittel zum Berechnen und Vergleichen so gestaltet sind, daß sie, falls nötig, eine oder mehrere Neuberechnungen und Neuvergleiche mit jeweils von den Mitteln zum elektronischen Erfassen des aktuellen Kurses neu erfaßten Kursen durchführen, bis die berechnete Rendite größer als das Renditeziel ist, wobei die Mittel weiter so gestaltet sind, daß sie bei erstmaligem und jedem weiteren Eintritt des vorgenannten Falls für ein Speichern des berechneten Renditeziels als neues Renditeziel in den Mitteln zum elektronischen Speichern eines Renditeziels sorgen und, falls nötig, eine oder mehrere Neuberechnungen durchführen, bis die berechnete Rendite kleiner als das jeweilige neue Renditeziel ist und nicht innerhalb eines Toleranzwertes liegt, und

   - Mitteln (9, 11; 34) zur Ausgabe eines Hinweises zum Verkauf der Aktien- bzw. Wertpapiergattung, wenn die berechnete Rendite kleiner als das (neue) Renditeziel ist und nicht innerhalb eines Toleranzwertes liegt.

2. Computersystem nach Anspruch 1, wobei die Mittel zur Ausgabe eines Hinweises zum Verkauf so ausgebildet sind, daß der Hinweis nur ausgegeben wird, wenn ein vorgegebenes Zeitintervall nach dem Kauf verstrichen ist.

3. Computersystem nach Anspruch 1 oder 2, wobei die Mittel zum Berechnen der Rendite und Vergleichen der berechneten Rendite mit dem Renditeziel Mittel (16) zur Berechnung einer annualisierten Rendite aufweisen, wobei die Mittel zur Berechnung einer annualisierten Rendite so ausgebildet sind, daß für Laufzeiten, die kleiner als ein Jahr sind, entweder die Rendite bezüglich Kaufkurs der gekauften Aktien- oder Wertpapiergattung oder die mittlere Jahres-Rendite berechnet wird.

4. Computersystem nach Anspruch 1, 2 oder 3 mit Mitteln (8) zur Berechnung eines Aktienbzw. Wertpapierindex für die Aktien und Wertpapiere eines Kunden-Depots, wobei die Mittel zur Berechnung eines Wertpapier-Index so ausgestaltet sind, daß der Index-Verlauf bei einem Zu- oder Verkauf einer Aktie oder Wertpapiers stetig ist, und wobei die Mittel zum Berechnen der Rendite und Vergleichen der berechneten Rendite mit dem Renditeziel zum Zugriff auf den Index-Verlauf als Prüfkriterium ausgebildet sind.

5. Computersystem nach einem der vorhergehenden Ansprüche 1 bis 4, mit

   - Mitteln (10) zur Prüfung, ob ein vorgegebenes Minimum des Kursverlaufs erreicht worden ist, und

   - Mitteln (10, 11) zur Ausgabe eines Verkaufssignals, wenn das Minimum erreicht worden ist.

6. Computersystem nach einem der vorhergehenden Ansprüche 1 bis 5 mit Datenbankmitteln (3) zur Eingabe und gegebenenfalls Speicherung der folgenden Angaben hinsichtlich eines Wertpapiers:

   - Kaufkurs,

   - Kaufzeit,

   - Stückzahl,

   - absolutes Rendite-Ziel,

- annualisiertes Rendite-Ziel,

- Prüfung des Rendite-Ziels bezogen auf einen Aktien- bzw. Wertpapier-Index,

- Maximum des Kursverlaufs, nachdem das Renditeziel erreicht worden ist,

- vorgegebenes Minimum des Kursverlaufs,

- Beachtung einer Spekulationsfrist, wobei die Mittel zur Bestimmung eines Maximums des Kursverlaufs zum Zugriff auf die Datenbankmittel ausgebildet sind, um ein Maximum des Kursverlaufs abzuspeichern.

7. Computersystem nach einem der vorangehenden Ansprüche, **dadurch gekennzeichnet, daß** die Mittel (2, 7, 9, 11, 15 und 16) Bestandteil eines Computers (1) sind.

8. Computersystem nach Anspruch 7, **dadurch gekennzeichnet, daß** ein Server-Computer (13) zur Bereitstellung von Aktien- und Wertpapierkursen und ein Server-Computer (14) zur Ausgabe von Verkaufsaufträgen vorgesehen sind, die über ein Netzwerk (12) mit dem Computer (1) verbindbar sind.

9. Computersystem nach einem der vorangehenden Ansprüche 1 bis 6 mit

- Mitteln (18) zur Generierung von Webseiten zur Verfügungstellung einer Nutzerschnittstelle,

- Mitteln (20, 22, 25) zur Speicherung von Nutzergruppen, wobei jedem Nutzer Zugriffsrechte zugeordnet sind,

- Mitteln (20) zur Eingabe eines Nutzers einer Nutzergruppe als Administrator, wobei die Mittel zur Speicherung so ausgebildet sind, daß der Adminstrator die Nutzer seiner Nutzergruppe und deren Zugriffsrechte eingeben kann.

10. Computersystem nach einem der vorangehenden Ansprüche 1 bis 6 und 9 mit

- Mitteln (20, 24) zur Eingabe von Kundendaten, wobei jeder Kunde einem Zwei-Tupel von Nutzern derselben Nutzergruppe zugeordnet wird,

- Mitteln (20, 26) zur Eingabe von Vertragsdaten, wobei jeder Vertrag einem Zwei-Tupel von Nutzers derselben Nutzergruppe zugeordnet wird,

- Mitteln (20) zur automatischen Erzeugung eines Bearbeitungsstatus für die Kundendaten und die Vertragsdaten,

- Mitteln (20) zur Erzeugung von Arbeitslisten, basierend auf dem Bearbeitungsstatus für jeden der Nutzer.

11. Computersystem nach Anspruch 9 oder 10, **dadurch gekennzeichnet, daß** die Mittel (18, 20, 22, 25; 20, 24, 26) Bestandteil eines Server-Computers sind.

12. Computersystem nach Anspruch 11, **dadurch gekennzeichnet, daß** der Server-Computer ein Application Service Provider (ASP) Server-Computer (17) ist.

13. Computersystem nach einem der vorangehenden Ansprüche, **dadurch gekennzeichnet, daß** ein Server-Computer (13) zur Bereitstellung von Aktien- und Wertpapierkursen und ein Server-Computer (14) zur Ausgabe von Verkaufsaufträgen vorgesehen sind, die über ein Netzwerk (12) mit dem ASP-Server-Computer (17) verbindbar sind.

14. Computersystem nach Anspruch 12 oder 13, **dadurch gekennzeichnet, daß** mindestens ein Computer (45) einer Bank oder dergleichen vorgesehen ist, der über ein Netzwerk (33) mit dem ASP-Server-Computer (17) verbindbar ist.

15. Computersystem nach Anspruch 14, **dadurch gekennzeichnet, daß** der ASP Server-Computer (17) so ausgelegt ist, daß mindestens ein Kunde (46) der Bank oder dergleichen unmittelbar über das Netzwerk (33) mit dem ASP Server-Computer (17) kommunizieren kann.

**16.** Verfahren zur Sicherung von Kursgewinnen von Aktien- und/oder Wertpapieranlegern unter Verwendung eines Computers, das die folgenden Schritte umfaßt:

a) elektronisches Speichern eines Renditeziels für eine gekaufte Aktien- oder Wertpapiergattung,

b) elektronisches Erfassen des aktuellen Kurses der Aktien- bzw. Wertpapiergattung,

c) Berechnen der Rendite und Vergleich der berechneten Rendite mit dem Renditeziel und, wenn die berechnete Rendite niedriger als oder genauso groß wie das Renditeziel ist, nochmaliger Durchlauf beginnend mit Schritt b),
anderenfalls

a') elektronisches Speichern der berechneten Rendite als neues Renditeziel,

b') elektronisches Erfassen des Kurses der Aktien- bzw. Wertpapiergattung,

c') Berechnen der Rendite und Vergleich der berechneten Rendite mit dem neuen Renditeziel und,

wenn die berechnete Rendite größer als das neue Renditeziel ist, nochmaliger Durchlauf beginnend mit Schritte a') bis c'),

wenn die berechnete Rendite niedriger als das neue Renditeziel ist, aber innerhalb eines Toleranzwertes liegt, Beibehalten des Renditeziels und nochmaliger Durchlauf beginnend mit Schritt b'), und,

wenn die berechnete Rendite kleiner als das neue Renditeziel ist und nicht innerhalb eines Toleranzwertes liegt, Ausgabe eines Hinweises zum Verkauf der Aktien- bzw. Wertpapiergattung.

**17.** Verfahren nach Anspruch 16, **dadurch gekennzeichnet, daß** das Erfassen der aktuellen Kurse in regelmäßigen zeitlichen Abständen erfolgt.

**18.** Verfahren nach Anspruch 16, **dadurch gekennzeichnet, daß** das Erfassen der aktuellen Kurse in unregelmäßigen zeitlichen Abständen erfolgt.

**19.** Verfahren nach einem der Ansprüche 16 bis 18, **dadurch gekennzeichnet, daß** die aktuellen Kurse automatisch abgerufen werden.

**20.** Verfahren nach einem der Ansprüche 16 bis 18, **dadurch gekennzeichnet, daß** die aktuellen Kurse mittels einer Push-Technologie erhalten werden.

**21.** Verfahren nach einem der Ansprüche 16 bis 20, **dadurch gekennzeichnet, daß** eine annualisierte Rendite berechnet wird, wobei für Laufzeiten, die kleiner als ein Jahr sind, entweder die Rendite bezüglich Kaufkurs der gekauften Aktien- oder Wertpapiergattung oder die mittlere Jahresrendite berechnet wird.

**22.** Verfahren nach einem der Ansprüche 16 bis 21, **dadurch gekennzeichnet, daß** ein Aktienbzw. Wertpapier-Index für die Aktien und Wertpapiere eines Kunden-Depots berechnet wird, wobei die Berechnung so erfolgt, daß der Index-Verlauf bei einem Zu- oder Verkauf einer Aktie bzw. eines Wertpapiers stetig ist.

**23.** Verfahren nach einem der Ansprüche 16 bis 22, mit folgenden weiteren Schritten:

- Eingabe eines Nutzers einer Nutzergruppe als Administrator in die Datenbank eines Server-Computers, wobei dem Administrator das Recht zugeordnet wird, die Nutzer seiner Nutzergruppe und deren Zugriffsrechte einzugeben,

- Eingabe von Kundendaten, wobei jeder Kunde einem Zwei-Tupel von Nutzern derselben Nutzergruppe zugeordnet wird,

- Eingabe von Vertragsdaten, wobei jeder Vertrag einem Zwei-Tupel von Nutzers derselben Nutzergruppe zugeordnet wird,

- automatische Erzeugung eines Bearbeitungsstatus für jeden Kunden und für jeden Vertrag,

- Erzeugung von Arbeitslisten für jeden der Nutzer basierend auf dem Bearbeitungsstatus.

24. Verfahren nach Anspruch 23, **dadurch gekennzeichnet, daß** der Server-Computer ein Application Service Provider (ASP) Server-Computer ist.

25. Computerprogramm mit Programmcode-Mitteln, um ein Verfahren gemäß einem der Ansprüche 16 bis 24 durchzuführen, wenn das Programm auf einem Computer ausgeführt wird.

26. Computerprogramm mit Programmcode-Mitteln nach Anspruch 25, die auf einem computerlesbaren Datenträger gespeichert sind.

27. Computerprogrammprodukt mit auf einem maschinenlesbaren Träger gespeicherten Programmcode-Mitteln, um alle Schritte gemäß einem der Ansprüche 16 bis 24 durchzuführen, wenn das Programm auf einem Computer ausgeführt wird.

Computer

Kursdatenbank 2

Kundendatenbank 3

Nutzerschnittstelle 4

Auswerteprogramm

6

Renditeziel 7

Absolutes Renditeziel 15

Annualisiertes Renditeziel 16

Berechnung Index 8

Bestimmung Gewinn-Sicherungs Stopp-Kurs 9

Stopp-Loss-Kurs 10

Arbeitsliste 11

1

13 Wertpapier-kurse

12

14 Fondsgesell-schaft/online Broker

5

Fig. 1

EP 1 241 609 A1

| Kunde | Vertrag (WPK) | Kauf-kurs | Kaufzeit-punkt | Stück | absolutes Rendite-Ziel | annualisiertes Rendite-Ziel | Bezug auf Index | Gewinn-Sicherungs Stopp-Kurs | Stopp-Loss-Kurs | Speku-lations-first |
|---|---|---|---|---|---|---|---|---|---|---|
|  |  |  |  |  |  |  |  |  |  |  |
|  |  |  |  |  |  |  |  |  |  |  |
|  |  |  |  |  |  |  |  |  |  |  |
|  |  |  |  |  |  |  |  |  |  |  |

Fig. 2

Fig. 3

Fig. 4

**Europäisches Patentamt**

**ERKLÄRUNG**

die nach Regel 45 des Europäischen Patentübereinkommens für das weitere Verfahren als europäischer Recherchenbericht gilt

Nummer der Anmeldung

EP 02 00 1137

---

Die Recherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind.

Grund:

| KLASSIFIKATION DER ANMELDUNG (Int.Cl.7) |
| --- |
| G06F17/60 |

Eine sinnvolle Recherche auf der Grundlage aller Ansprüche ist nicht möglich, da diese sich auf - Plan, Regeln und Verfahren für geschäftliche Tätigkeiten - Artikel 52 (2)(c) und Art. 52(3) EPÜ - beziehen.

Die Ansprüche beziehen sich auf einen Sachverhalt, der nach Art. 52(2) und (3) EPÜ von der Patentierbarkeit ausgeschlossen ist. In Anbetracht dessen, dass der beanspruchte Gegenstand nur derartige nicht-technische Sachverhalte oder zu deren technologischer Umsetzung allgemein bekannte Merkmale anführt, konnte der Rechercheprüfer keine technische Aufgabe feststellen, deren Lösung eventuell eine erfinderische Tätigkeit beinhalten würde. Es war daher nicht möglich, sinnvolle Ermittlungen über den Stand der Technik durchzuführen (Regel 45 EPÜ und Richtlinien für die Prüfung im EPA, Teil B, Kapitel VIII, 1-6).

Der Anmelder wird darauf hingewiesen, daß im Zuge der Prüfung eine Recherche durchgeführt werden kann, sollten die einer Erklärung gemäß Regel 45 EPÜ zugrundeliegenden Mängel behoben worden sein (Vgl. EPA-Richtlinien C-VI, 8.5).

---

| Recherchenort | Abschlußdatum | Prüfer |
| --- | --- | --- |
| MÜNCHEN | 24. Juli 2002 | Kruspig, S |

EPO FORM 1504 (P04C39)